# EUROPEAN PATENT APPLICATION

(11) **EP 4 796 399 A1**
(43) Date of publication of application: **26.08.2026**
(21) Application number: 26159885.8
(22) Date of filing: 20.02.2026
(51) Int. Cl.: B60W 30/02, B60W 30/14, B60W 50/08

(54) **VEHICLE SPEED CONTROL**

(30) Priority: 21.02.2025 GB 202502518
(71) Applicant: Jaguar Land Rover Limited, Coventry, Warwickshire CV3 4LF (GB)
(72) Inventor: Dobson, Jordan, COVENTRY, CV3 4LF (GB); Silk, James, COVENTRY, CV3 4LF (GB); Javed, Usmaan, COVENTRY, CV3 4LF (GB); Walker, Stuart, COVENTRY, CV3 4LF (GB); Kershaw, Jack, COVENTRY, CV3 4LF (GB)
(74) Representative: Jaguar Land Rover Patents Department

(57) **Abstract**

Aspects and embodiments of the invention relate to a speed control system (5) for a vehicle (1), the speed control system (5) comprising one or more processors (15) collectively configured to: receive a signal indicative of a vehicle speed (27); receive a signal indicative of a driving surface gradient (31); receive a signal indicative of at least one vehicle body acceleration component (23); determine a score (59) in dependence on the at least one vehicle body acceleration component (23); determine a score difference (101) between the score (59) and a predefined score target (97); determine a target value for vehicle acceleration using a predefined relationship between (i) the score difference (101), (ii) the vehicle speed (27) and/or the driving surface gradient (31), and (iii) vehicle acceleration; and generate a vehicle acceleration request (37) based on the determined target value for vehicle acceleration. Further aspects and embodiments of the invention relate to a system (3) and a vehicle (1) comprising the speed control system (5) Further aspects and embodiments of the invention relate to a corresponding method (400) of controlling a speed of a vehicle (1) and computer-readable instructions (19) arranged to perform the method (400).

## Description

### TECHNICAL FIELD

The present disclosure relates to vehicle speed control. Aspects of the invention relate to a control system, to a system, to a vehicle, to a method, and to computer-readable instructions.

### BACKGROUND

Vehicle speed control systems commonly provide non-adaptive speed control, whereby the system attempts to maintain the vehicle at a set speed. Some vehicle speed control systems are adaptive in that they will modulate a maximum speed of travel below the set speed in response to, for example, encountering challenging terrain. It is an aim of the present invention to address one or more disadvantages of the prior art.

### SUMMARY OF THE INVENTION

Aspects and embodiments of the invention provide a control system, a system, a vehicle, a method, and computer-readable instructions as claimed in the appended claims.

According to an aspect of the present invention there is provided a speed control system for a vehicle, the speed control system comprising one or more processors collectively configured to: receive a signal indicative of a vehicle speed; receive a signal indicative of a driving surface gradient; receive a signal indicative of at least one vehicle body acceleration component; determine a score in dependence on the at least one vehicle body acceleration component; determine a score difference between the score and a predefined score target; determine a target value for vehicle acceleration using a predefined relationship between (i) the score difference, (ii) the vehicle speed and/or the driving surface gradient, and (iii) vehicle acceleration; and generate a vehicle acceleration request based on the determined target value for vehicle acceleration.

Advantageously the predefined relationship defines a unified multivariate dependency between vehicle acceleration and the score difference and the vehicle speed and/or the driving surface gradient. This enables improved modelling of the interdependencies between these parameters. For example if the target value for vehicle acceleration was only ever reacting to the most severe amongst the score difference and the vehicle speed and/or the driving surface gradient, this may be an over- or under-reaction depending on the severity of the other two parameters.

The speed control system comprises one or more controllers collectively comprising at least one electronic processor having an electrical input for receiving an input signal; and at least one memory device electrically coupled to the at least one electronic processor and having instructions stored therein; and wherein the at least one electronic processor is configured to access the at least one memory device and execute the instructions thereon so as to: receive a signal indicative of a vehicle speed; receive a signal indicative of a driving surface gradient; receive a signal indicative of at least one vehicle body acceleration component; determine a score in dependence on the at least one vehicle body acceleration component; determine a score difference between the score and a predefined score target; determine a target value for vehicle acceleration using a predefined relationship between (i) the score difference, (ii) the vehicle speed and/or the driving surface gradient, and (iii) vehicle acceleration; and generate a vehicle acceleration request based on the determined target value for vehicle acceleration.

Optionally the at least one vehicle body acceleration component comprises at least one from: heave, pitch, or roll accelerations.

Optionally the at least one vehicle body acceleration component is received from one or more accelerometers and/or one or more gyroscopes mounted to a body of the vehicle.

Optionally the one or more processors are collectively configured to: receive multiple vehicle body acceleration components, wherein different vehicle body acceleration components correspond to different degrees of freedom of movement of a body of the vehicle; and determine the score in dependence on a combination of the multiple vehicle body acceleration components.

Optionally the one or more processors are collectively configured to combine the multiple vehicle body acceleration components by applying different weights to different vehicle body acceleration components

Optionally different weights reflect perceivable effects of the vehicle body acceleration components on an occupant of the vehicle.

Optionally the one or more processors are collectively configured to: receive a signal indicative of a user-selected setting; and determine the predefined score target in dependence on the user-selected setting.

Optionally the user-selected setting is a ride comfort setting for the vehicle.

Optionally the one or more processors are collectively configured to obtain, in dependence on the user-selected setting, the predefined relationship between (i) the score difference, (ii) the vehicle speed and/or the driving surface gradient, and (iii) vehicle acceleration, wherein there are different predefined relationships associated with different user-selected settings.

Optionally the predefined relationship comprises increasing vehicle acceleration as the score difference becomes more positive or less negative.

Optionally the predefined relationship comprises lower vehicle acceleration for downhill driving surface gradients than for uphill driving surface gradients.

Optionally the predefined relationship comprises greater decreases in vehicle acceleration for steeper downhill driving surface gradients.

Optionally the predefined relationship comprises greater decreases in vehicle acceleration for a given downhill driving surface gradient for less positive or more negative score differences.

Advantageously this provides for acceleration to be reduced when going downhill (at least if the driving surface is getting rougher) because the effect of roughness or obstacles being encountered without the vehicle slowing is that the vehicle can feel like it is "running away" i.e., that the speed control system is not properly in control of the vehicle's speed, which the driver may find perturbing.

Optionally the predefined relationship comprises greater increases in vehicle acceleration for steeper uphill driving surface gradients.

Optionally the predefined relationship comprises greater increases in vehicle acceleration for a given uphill driving surface gradient for more positive or less negative score differences.

Advantageously this provides for acceleration to be boosted when going uphill (at least provided that the driving surface is not getting rougher) to enable the vehicle to have the momentum to overcome roughness or obstacles it may subsequently encounter which could otherwise rob it of momentum and bring it to a halt or to a slow enough speed that further speed control becomes challenging.

Optionally the predefined relationship comprises, for a first range of vehicle speeds, increasing vehicle acceleration for at least positive score differences.

Optionally the predefined relationship comprises, for the first range of vehicle speeds, greater increases in vehicle acceleration for more positive score differences.

Optionally the predefined relationship comprises, for the first range of vehicle speeds, greater increases in vehicle acceleration for lower vehicle speeds.

Optionally the predefined relationship comprises, for a second range of vehicle speeds, which is higher than the first range of vehicle speeds, decreasing vehicle acceleration for at least positive score differences.

Optionally the predefined relationship comprises, for the second range of vehicle speeds, greater decreases in vehicle acceleration for more positive score differences.

Optionally the predefined relationship comprises, for the second range of vehicle speeds, greater decreases in vehicle acceleration for higher vehicle speeds.

Advantageously this provides for acceleration to be boosted at low speeds (except over the roughest driving surfaces) in order to have some speed in reserve in case obstacles are encountered that need a bit of momentum to roll over.

Advantageously this also provides for acceleration to be reduced at high speeds so that the vehicle does not pick up more speed.

Optionally the one or more processors are collectively configured to: determine a second vehicle acceleration request in dependence on a difference between the vehicle speed and a cruise control speed setpoint; arbitrate between the vehicle acceleration request and the second vehicle acceleration request; and output an arbitrated vehicle acceleration request.

Optionally the arbitration comprises a minimum magnitude selection.

Advantageously this modulates a maximum speed of travel below a cruise control speed setpoint if there are significant vehicle body accelerations, for example due to travelling over a rough driving surface.

Optionally an operating condition of the speed control system is that the vehicle speed is above a threshold speed and the one or more processors are collectively configured to: determine a third vehicle acceleration request for maintaining vehicle speed above the threshold speed; and arbitrate between the vehicle acceleration request and the third vehicle acceleration request; and output an arbitrated vehicle acceleration request.

Optionally the arbitration comprises a maximum magnitude selection.

Advantageously this prevents the vehicle's speed from dropping too low to the point where it becomes challenging to continue to control the vehicle's speed in a predictable and/or consistent manner.

According to another aspect of the invention there is provided a vehicle or a system for controlling a speed of a vehicle, comprising: the speed control system; a sensor configured to output a signal indicative of a vehicle speed; at least one sensor configured to output a signal or signals indicative of at least one vehicle body acceleration component; and a vehicle powertrain configured to accelerate the vehicle in accordance with the vehicle acceleration request by controlling an amount of drive torque applied to one or more wheels of the vehicle.

Optionally the vehicle or system also comprises a vehicle braking system which is configured to decelerate the vehicle in accordance with the vehicle acceleration request being a request for negative acceleration by application of a brake torque.

According to another aspect of the invention there is provided a method for controlling a speed of a vehicle, the method comprising: receiving an indication of a vehicle speed; receiving an indication of a driving surface gradient; receiving an indication of at least one vehicle body acceleration component; determining a score in dependence on the at least one vehicle body acceleration component; determining a score difference between the score and a predefined score target; determining a target value for vehicle acceleration using a predetermined relationship between (i) the score difference, (ii) the vehicle speed and/or the driving surface gradient, and (iii) vehicle acceleration; and generating a vehicle acceleration request based on the determined target value for vehicle acceleration.

According to another aspect of the invention there is provided computer readable instructions which, when executed by a computer, are arranged to perform any one or more of the methods described herein.

According to another aspect of the invention there is provided a non-transitory computer readable medium comprising computer readable instructions that, when executed by one or more electronic processors, causes the one or more electronic processors to carry out any one or more of the methods described herein.

According to another aspect of the present invention there is provided a speed control system for a vehicle, the speed control system comprising one or more processors collectively configured to: receive a signal indicative of a vehicle speed; receive a signal indicative of at least one vehicle body acceleration component; and generate a vehicle acceleration request which depends on the at least one vehicle body acceleration component.

Within the scope of this application it is expressly intended that the various aspects, embodiments, examples and alternatives set out in the preceding paragraphs, in the claims and/or in the following description and drawings, and in particular the individual features thereof, may be taken independently or in any combination that falls within the scope of the appended claims. That is, all embodiments and/or features of any embodiment can be combined in any way and/or combination that falls within the scope of the appended claims, unless such features are incompatible. The applicant reserves the right to change any originally filed claim or file any new claim accordingly, including the right to amend any originally filed claim to depend from and/or incorporate any feature of any other claim although not originally claimed in that manner.

### BRIEF DESCRIPTION OF THE DRAWINGS

One or more embodiments of the invention will now be described, by way of example only, with reference to the accompanying drawings, in which:
FIG 1 illustrates an example of a vehicle;
FIGs 2A and 2B illustrate an example of a system for controlling a speed of a vehicle;
FIG 3 illustrates an example of a speed control system for a vehicle;
FIG 4 illustrates an example of a part of a speed control system for a vehicle;
FIG 5 illustrates an example of a predefined relationship between vehicle speed and a sampling window length used by a speed control system for a vehicle;
FIG 6 illustrates an example of a speed control system for a vehicle;
FIG 7 illustrates an example of a speed control system for a vehicle;
FIGs 8 and 9 illustrate examples of a predefined relationship between vehicle speed and rate limits used by a speed control system for a vehicle;
FIG 10 illustrates an example of a part of a speed control system for a vehicle;
FIG 11 illustrates an example of rate limits used by a speed control system for a vehicle;
FIG 12 illustrates an example of a speed control system for a vehicle;
FIG 13 illustrates an example of a part of a speed control system for a vehicle;
FIG 14 illustrates an example of a part of a speed control system for a vehicle;
FIGs 15 to 17 illustrates examples of effects various parameters have on a target value for vehicle acceleration determined by a speed control system for a vehicle;
FIG 18 illustrates an example of a part of a speed control system for a vehicle;
FIG 19 illustrates an example of a method for controlling a speed of a vehicle;
FIG 20 illustrates an example of a method for controlling a speed of a vehicle; and
FIG 21 illustrates an example of a method for controlling a speed of a vehicle.

### DETAILED DESCRIPTION

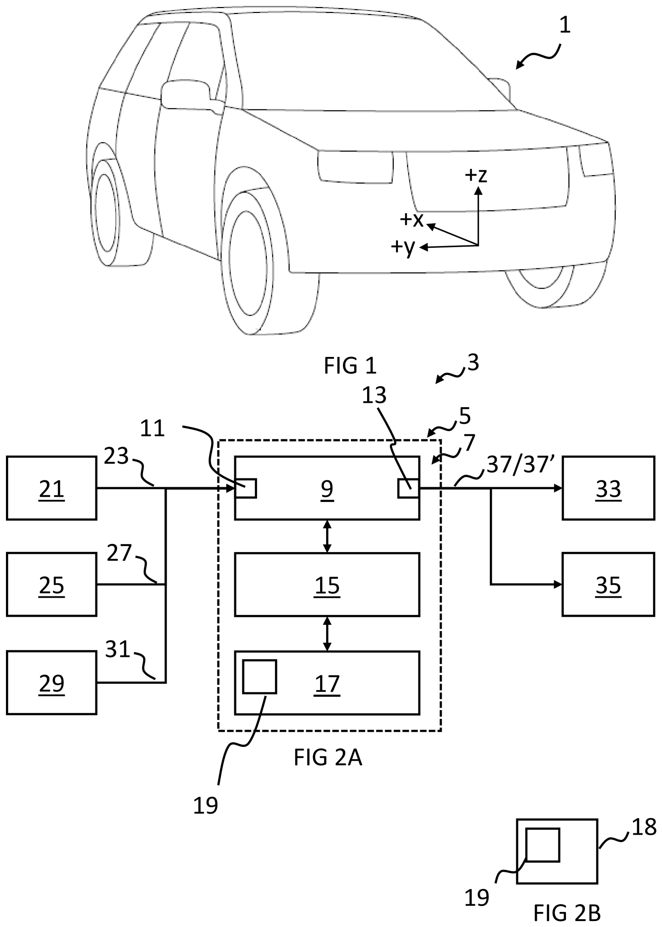

A vehicle 1 in accordance with an embodiment of the present invention is described herein with reference to the accompanying FIG 1. In some, but not necessarily all examples, the vehicle 1 is a passenger vehicle, also referred to as a passenger car or as an automobile. In other examples, embodiments of the invention can be implemented for other applications, such as commercial vehicles.

FIG 1 is a front perspective view and illustrates a longitudinal x-axis between the front and rear of the vehicle 1 representing a centreline, an orthogonal lateral y-axis between left and right lateral sides of the vehicle 1, and a vertical z-axis. A forward/fore direction typically faced by a driver's seat is in the negative x-direction; rearward/aft is +x. A rightward direction as seen from the driver's seat is in the positive y-direction; leftward is -y. These are a first lateral direction and a second lateral direction. An upward direction as seen from the driver's seat is in the positive z-direction; downward is -z.

FIG 2A illustrates a system for controlling the vehicle's speed.

The system 3 comprises at least one vehicle body acceleration sensor 21, which is a sensor configured to output a signal or signals indicative of at least one vehicle body acceleration component 23.

A vehicle body acceleration component 23 is an acceleration of the vehicle body in one of the six mechanical degrees of freedom of movement in three-dimensional space.

Surge (or longitudinal) acceleration, involving forward and/or rearward translational accelerations along the x-axis, is a vehicle body acceleration component 23. Sway (or lateral) acceleration, involving rightward and/or leftward translational accelerations along the y-axis, is a vehicle body acceleration component 23. Heave (or vertical) acceleration, involving upward or downward translational accelerations along the z-axis, is a vehicle body component 23. Roll acceleration, involving angular/rotational accelerations about the x-axis, is a vehicle body acceleration component 23. Pitch acceleration, involving angular/rotational accelerations about the y-axis, is a vehicle body acceleration component 23. Yaw acceleration, involving angular/rotational accelerations about the z-axis, is a vehicle body acceleration component 23.

The vehicle body is part of the vehicle's sprung mass. The vehicle body comprises the cabin (sometimes called the passenger cell) and thus vehicle occupants are located within the vehicle body and subject to the accelerations that the vehicle body experiences. The vehicle body acceleration components 23 may therefore be considered as indicative of the roughness of the driving surface over which the vehicle 1 is travelling, as modulated by the vehicle's suspension system, from the perspective of the vehicle occupant.

The at least one vehicle body acceleration sensor 21 may be at least one accelerometer and/or at least one gyroscopes or else at least one other inertial sensor mounted to the vehicle body. Multiple vehicle body acceleration sensors 21 can be combined into an internal measurement unit mounted to the vehicle body. In some but not necessarily all examples rotational movements of the vehicle body in three-dimensional space (e.g., roll, pitch and/or yaw) may be measured as a rate of change with respect to time (e.g., roll rate, pitch rate, and/or yaw rate) by the vehicle body acceleration sensors 21 and may be differentiated to yield respective vehicle body acceleration components 23. The differentiation may be performed by an (unillustrated) input pre-processing block implemented by a speed control system 5 or may be performed by another control system before being input to the speed control system 5.

The system 3 comprises a vehicle speed sensor 25, which is a sensor configured to output a signal indicative of a vehicle speed 27. The vehicle speed 27 refers to the speed at which the vehicle 1 is travelling over the driving surface. The vehicle speed 27 can be derived from measurements of engine speed using a crank position sensor, or post-transmission powertrain speed using a drive train speed sensor, or wheel speed using a wheel speed sensor, or the like. Indirect measurement of vehicle speed 27 may be processed to calculate vehicle speed 27 by another control system before being input to a speed control system 5.

In some but not necessarily all examples the system 3 comprises a gradient sensor 29, which is a sensor configured to output a signal indicative of a driving surface gradient 31.

In some examples but not necessarily all examples the gradient sensor 29 may be an inertial sensor associated with pitch of the vehicle 1. While this may not directly yield the driving surface gradient 31, a pitch angle may be derived by integrating the output of the inertial sensor and this may strongly influence an estimate of the driving surface gradient 31. Filtering may be applied to filter out noise in the output from the inertial sensor due to disturbances or obstacles on the driving surface, such as potholes, since the estimate of the gradient should reflect the overall slope and not be excessively localised. Further processing may also be performed. It will therefore be appreciated that in some but not necessarily all examples the gradient sensor 29 may be one of the vehicle body acceleration sensors 21, though the input into a speed control system 5 for the purpose of indicating a driving surface gradient 31 may not come directly from that sensor due to a need for further processing of its output to estimate the driving surface gradient 31.

The system 3 comprises a speed control system 5 comprising one or more controllers 7.

The speed control system 5 is configured to receive data regarding at least one vehicle body acceleration component 23 from at least one vehicle body acceleration sensor 21.

In some but not necessarily all examples the speed control system 5 is configured to receive and use data regarding at least one rotation acceleration experienced by the vehicle body. That is, the system 3 is configured to use at least one of the roll, pitch, or yaw accelerations experienced by the vehicle body.

In some but not necessarily all examples the speed control system 5 is configured to receive and use data regarding at least one non-longitudinal translational acceleration experienced by the vehicle body. That is, the system 3 is configured to use at least one of the sway or heave accelerations experienced by the vehicle body.

The accelerations that a vehicle occupant is assumed to be most susceptible to are those in directions in which their bodies are least supported. This may be along the z-axis, about the x-axis, and about the y-axis. Therefore, in some but not necessarily all examples the speed control system 5 is configured to receive and use data regarding at least one of the heave, pitch, or roll accelerations experienced by the vehicle body. In some but not necessarily all examples the speed control system 5 is configured to receive and use data regarding each of the heave, pitch, and roll accelerations experienced by the vehicle body. It will be appreciated that this is not to exclude that the speed control system 5 may now or in the future receive and use data regarding other vehicle body acceleration components such as sway acceleration and yaw acceleration.

Vehicle occupants may further be more susceptible to vehicle body accelerations occurring at certain frequencies. Those frequencies to which the occupants may be more susceptible may be different in respect of different degrees of freedom of movement. In some but not necessarily all examples therefore the speed control system 5 is configured to pre-process the data regarding the at least one vehicle body acceleration component 23 before using it, wherein the pre-processing comprises filtering the at least one vehicle body acceleration component 23 to differently weight different frequencies. Different filtering may be performed in respect of different vehicle body acceleration components 23.

The speed control system 5 is also configured to receive data regarding vehicle speed 27 from a vehicle speed sensor 25 and in some but not necessarily all examples data regarding a driving surface gradient 31 from a gradient sensor 29.

The speed control system 5 is configured to generate at least one vehicle acceleration request 37 or an arbitrated vehicle acceleration request 37' and output this, as a control signal, to control the vehicle's speed, for example via control of a powertrain 33 of the vehicle 1 or control of a braking system 35 of the vehicle 1.

The vehicle acceleration request 37/37' is a request for longitudinal acceleration of the vehicle 1 for changing the speed at which the vehicle 1 is travelling over the driving surface.

The speed control system 5 as illustrated in FIG 2A comprises one controller 7, although it will be appreciated that this is merely illustrative. The controller 7 comprises processing means 15 and memory means 17. The processing means 15 may be one or more electronic processing device 15 which operably execute computer-readable instructions. The memory means 17 may be one or more memory device 17. The memory means 17 is electrically coupled to the processing means 15. The memory means 17 is configured to store instructions, and the processing means 15 is configured to access the memory means 17 and execute the instructions stored thereon.

The controller 7 comprises an input means 11 and an output means 13. The input means 11 may comprise an electrical input 11 of the controller 7. The output means 13 may comprise an electrical output 13 of the controller 7. The controller 7 may have an interface 9 comprising an electrical input/output I/O 11, 13, or an electrical input 11, or an electrical output 13, for receiving information and interacting with external components. The input 11 is arranged to receive: at least one signal from at least one vehicle body acceleration sensor 21; a signal from a vehicle speed sensor 25; and in some but not necessarily all examples a signal from a gradient sensor 29. Said signals are electrical signals which are respectively indicative of at least one vehicle body acceleration component 23, vehicle speed 27, and driving surface gradient 31. The output 13 is arranged to output a control signal, indicative of a vehicle acceleration request 37 or an arbitrated vehicle acceleration request 37' for controlling the vehicle's speed, for example via control of the powertrain 33 or the braking system 35.

The speed control system 5 may be an 'off-road' or 'off-highway' speed control system. The speed control system may be operable provided that the vehicle speed 27 is within a predefined range of speed. For example, an operating condition of the speed control system may be that the vehicle speed 27 is below 30km/h and above 2 or 2.5 km/h. It will be appreciated that other values for endpoints of the predefined range of speed may be useful. When the vehicle speed 27 exceeds this predefined range of speed, another speed control system, suitable for higher speeds of driving, may take over. This other vehicle speed control system may be useful when driving in on-highway driving conditions such as on a relatively smooth, dry tarmac or concrete driving surface and may involve functions such as maintaining a distance to a lead vehicle. This other, higher-speed speed control system is not, however, the subject of the present application.

In some but not necessarily all examples the speed control system 5 may be activated by an occupant of the vehicle 1 via user-selectable input controls. In other examples the speed control system 5 may be activated automatically upon the satisfaction of certain one or more criteria.

The system 3 comprises the powertrain 33. The powertrain 33 is configured to accelerate the vehicle 1 in accordance with the vehicle acceleration request 37 or arbitrated vehicle acceleration request 37' by controlling an amount of drive torque applied to one or more wheels of the vehicle 1. The powertrain 33 can be controlled to provide positive or negative acceleration in accordance with the vehicle acceleration request 37 or arbitrated vehicle acceleration request 37'.

The system 3 may also comprise the braking system 35. The braking system 35 is configured to decelerate the vehicle 1 by application of a brake torque in accordance with the vehicle acceleration request 37 or arbitrated vehicle acceleration request 37' being a request for negative acceleration.

FIG 2B illustrates a non-transitory computer-readable storage medium 18 comprising the instructions (computer software).

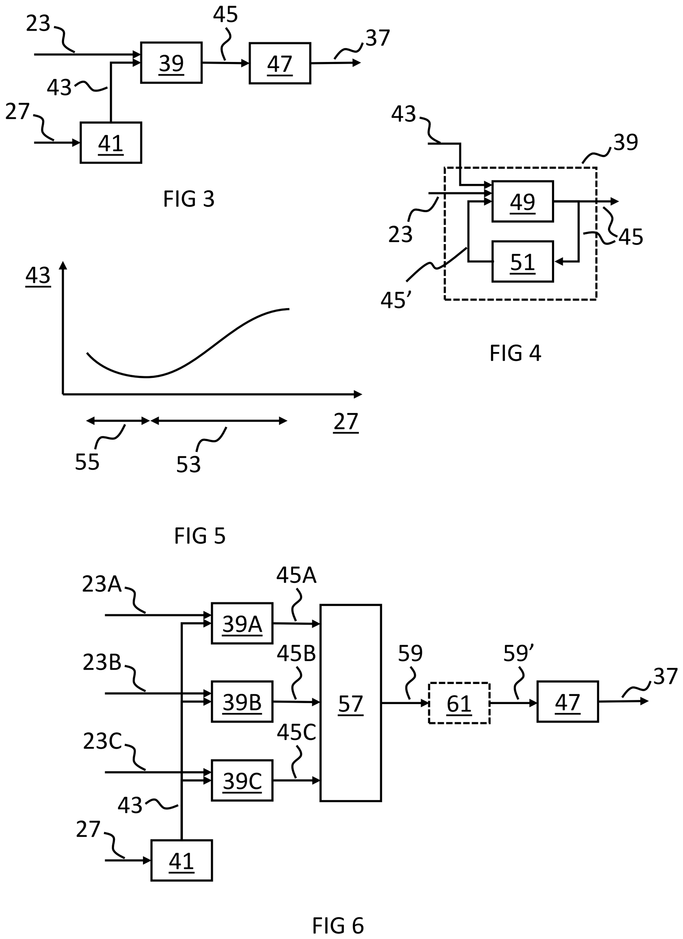

FIG 3 illustrates an example of the speed control system 5 which is configured to generate a vehicle acceleration request 37. In this example the speed control system 5 comprises a running average calculation block 39, a sampling window length determination block 41, and a vehicle acceleration target determination block 47.

The running average calculation block 39 is configured to calculate and output a running average magnitude 45 of at least one vehicle body acceleration component 23 over a sampling window. The sampling window includes a current sample. The running average calculation block 39 receives as inputs a current sample value of at least one vehicle body acceleration component 23 and a window length 43 for a sampling window over which the running average magnitude 45 of the at least one vehicle body acceleration component 23 is to be calculated. The window length 43 is received from the sampling window length determination block 41. In some but not necessarily all examples the window length 43 expressed in the form of a number of samples if the sampling rate for the at least one vehicle body acceleration component 23 is constant. In some but not necessarily all examples, the particular average calculated is a root mean square.

In some but not necessarily all examples the running average calculation block 39 is configured to compute the running average magnitude 45 recursively. An example is illustrated in FIG 4. In this example the running average calculation block 39 comprises a weighted summation block 49 and a delay block 51. The weighted summation block 51 is configured to compute a weighted summation of a new data point (current sample) for the at least one vehicle body acceleration component 23 with a running average magnitude 45' of the at least one vehicle body acceleration component at a previous time step, for example the immediately preceding time step. The running average magnitude 45' of the at least one vehicle body acceleration component at a previous time step is provided as an input to the weighted summation block 51. The delay block 51 is configured to receive as an input an output from the weighted summation block 49 and to hold and delay this input by one or more time steps before releasing it as an input to the weighted summation block 51. In some but not necessarily all examples the delay block 51 is a unit delay block and is configured to hold and delay an input by one time step before releasing it as an output. In some but not necessarily all examples one time step is equal to the sampling period of the at least one vehicle body acceleration component 23. The weighted summation block 51 is configured to vary the weights applied to the new data point (current sample) for the at least one vehicle body acceleration component 23 and to the running average magnitude 45' of the at least one vehicle body acceleration component at a previous time step in dependence on the window length 43, which it is also configured to receive as an input.

In other examples the running average calculation block 39 may be configured to temporarily store previous samples (for example in a buffer) and to compute an average of the stored previous samples within the received window length 43.

Returning to FIG 3, the sampling window length determination block 41 is configured to determine a window length 43 for a sampling window over which the running average magnitude 45 of the at least one vehicle body acceleration component 23 is to be calculated. The sampling window length determination block 41 receives as an input a current sample value of the vehicle speed 27. The sampling window length determination block 41 is configured with a predefined relationship between vehicle speed 27 and window length 43. The window length 43 for the current vehicle speed 27 according to the predefined relationship is output by the sampling window length determination block 41. In some but not necessarily all examples the predefined relationship is expressed in the form of a lookup table comprising breakpoints for vehicle speed 27 and table data indicative of window length 43. That is, the lookup table comprises a set of values for vehicle speed 27 to which corresponding window lengths 43 are mapped. The sampling window length determination block 41 is configured to perform a lookup operation in respect of the lookup table using the current vehicle speed 27 to retrieve a corresponding value for the window length 43. The sampling window length determination block 41 may be configured to estimate a value for the window length 43 via interpolation of the table data if the current vehicle speed 27 is not an explicitly defined breakpoint.

FIG 5 illustrates a graphical representation of the predefined relationship between vehicle speed 27 (plotted on the x-axis) and window length 43 (plotted on the y-axis) with which the sampling window length determination block 41 is configured in some, but not necessarily all examples.

In this example the predefined relationship comprises, for a first range of vehicle speeds 53, an increase in the window length 43 as the vehicle speed 27 increases. For example, the window length 43 may increase from about 0.5 seconds at the lowest speed in the first range 53 up to between about 5 or 7 seconds at the highest speed in the first range 53. At an example sampling rate of 1 sample every 0.01 seconds, this results in averaging over about 50 samples when the vehicle 1 is travelling at the lowest speed in the first range 53 and average over between about 500 and 700 samples when the vehicle 1 is travelling at the highest speed in the first range 53. Consequently, as the window length 43 increases, new data such as the current sample value of the at least one vehicle body acceleration component 23 is less impactful on the running average magnitude 45 thereof. This makes the speed control system 5 less reactive (slower to react) to changes in the roughness of the driving surface. Conversely, as the window length 43 decreases new data such as the current sample value of the at least one vehicle body acceleration component 23 is more impactful on the running average magnitude 45 thereof. This makes the speed control system 5 more reactive (faster to react) to changes in the roughness of the driving surface. The window length 43 therefore controls the reactiveness of the speed control system 5 to the roughness of the driving surface over which the vehicle 1 is travelling.

If travelling at low speed, as one might over a track of sustained roughness, reacting quickly to changes in roughness is beneficial to avoid loss of control. If travelling at higher speed, as one might on a generally smooth track where changes in roughness might come from a small pothole or speed bump, being less reactive (slower and less aggressive) to such inputs is therefore beneficial as there may be little or no benefit to slowing the vehicle down after the isolated disturbance and such vehicle behaviour may feel unintuitive to a driver.

Also in this example the predefined relationship comprises, for a second range of vehicle speeds 55, which is contiguous with, but lower and narrower than, the first range of vehicle speeds 53, an increase in the window length 43 as the vehicle speed 27 decreases. The window length 43 at the lowest speed in the second range 55 (i.e., the maximum window length for the second range 55) is however shorter than the window length 43 at the highest speed in the first range 53 (i.e., the maximum window length for the first range 53).

Very low speeds, such as the lowest speeds in the lower second range 55, may approach the lower endpoint of the predefined range of speeds in which the speed control system 5 is operational. To reduce the likelihood of the speed control system 5 reacting to changes in the roughness of the driving surface in a way that proposes to drop the vehicle's speed below this endpoint, the window length 43 (and thus number of samples, assuming a consistent sampling rate/sampling period) is not at its minimum at these very low speeds.

In some but not necessarily all other examples the first range of vehicle speeds 53 comprises all possible vehicle speeds 27 or at least all possible vehicle speeds 27 at which the speed control system 5 is operational. Accordingly in such examples the window length 43 increases as the vehicle speed 27 increases.

Returning to FIG 3, the vehicle acceleration target determination block 47 is configured to determine a target value for vehicle acceleration and output a vehicle acceleration request 37 based on the determined target value. The vehicle acceleration target determination block 47 receives as an input the running average magnitude 45 of at least one vehicle body acceleration component 23 from the running average calculation block 39, or a parameter dependent on this running average magnitude 45. In the former case the vehicle acceleration target determination block 47 is configured to determine a target value for vehicle acceleration using a predefined relationship between at least the running average magnitude 45 and vehicle acceleration. In the latter case in some but not necessarily all examples the parameter is a magnitude difference between the running average magnitude of the vehicle body acceleration component and a predefined target magnitude. The predefined target magnitude may reflect a tolerable magnitude for the vehicle body acceleration component in respect of vehicle occupant comfort. In such examples the vehicle acceleration target determination block 47 is configured to determine a target value for vehicle acceleration using a predefined relationship between at least the determined magnitude difference and vehicle acceleration.

FIG 6 illustrates an example in which the vehicle acceleration request 37 is generated based on multiple vehicle body acceleration components 23A-C. Each of the vehicle body acceleration components 23A-C corresponds to different degrees of freedom of movement of a body of the vehicle 1, for example heave, pitch, and roll accelerations.

The speed control system 5 of the FIG 6 example comprises multiple running average calculation blocks 39A-C, each receiving as an input a current sample value of a different one of the multiple vehicle body acceleration components 23A-C. Each running average calculation blocks 39A-C is as described in relation to FIG 3 or FIG 4.

The speed control system 5 of the FIG 6 example comprises a sampling window length determination block 41 as described in relation to FIG 3 and optionally FIG 5. The window length 43 calculated by the sampling window length determination block 41 is provided as an input to each running average calculation block 39A-C.

The speed control system 5 of the FIG 6 example comprises a score calculation block 57, which receives as inputs respective running average magnitudes 45A-C for each of the multiple vehicle body acceleration components 23A-C over the determined sampling window 43. The score calculation block 57 is configured to determine a score 59 indicative of a combination of the respective running average magnitudes 45A-C for each of the multiple vehicle body acceleration components 23A-C. In some but not necessarily all examples combining the respective running average magnitudes 45A-C for each of the multiple vehicle body acceleration components 23A-C comprises applying different weights to the running average magnitudes 39A-C of different vehicle body acceleration components 23A-C. The different weights may reflect perceivable effects of the vehicle body acceleration components 23A-C on an occupant of the vehicle 1. The different weights may be derived from experimental data, theoretical modelling, or a combination thereof. The different weights may be fine-tuned to fit test users' subjective comfort evaluations when subjected to these accelerations. In some but not necessarily all examples combining the respective running average magnitudes 45A-C for each of the multiple vehicle body acceleration components 23A-C comprises calculating a weighted root mean square, wherein the different weights are applied in respect of the running average magnitudes 45A-C of different vehicle body acceleration components 23A-C.

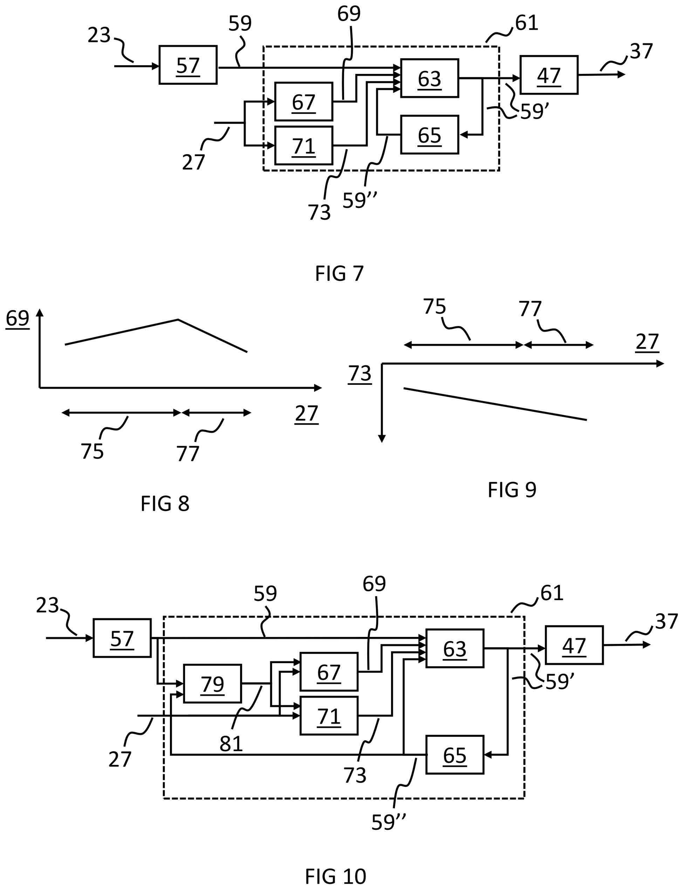

The speed control system 5 of the FIG 6 example comprises a rate limiter block 61. The rate limiter block 61 is optional and need not be included in combination with the score calculation block 57. The rate limiter block 61 is configured to receive as an input the score 59 output from the score calculation block 57. The rate limiter block 61 is configured to apply rate limiting to the score 59 to limit a rate at which the score 59 can change over time. The rate limiter block 61 may be configured to apply fixed positive and negative limits on the rate at which the score 59 can change over time or may be configured to vary the positive and negative limits based on one or more parameters such as vehicle speed 27. An example of the latter case will be described in relation to FIG 7. The application of rate limiting results in a rate-limited score 59'. If the score 59 has changed with respect to a previous score, such as the score at the immediately preceding time step, at a rate which exceeds the positive or negative limits, the rate-limited score 59' will be equal to the previous score respectively plus or minus the change permitted by the positive or negative limit. If the score 59 has changed with respect to the previous score at a rate which is below the positive or negative limits, the rate-limited score 59' will be the same as the score 59.

The speed control system 5 of the FIG 6 example comprises a vehicle acceleration target determination block 47 similar to that described in relation to FIG 3. The vehicle acceleration target determination block 47 is configured to determine a target value for vehicle acceleration and output a vehicle acceleration request 37 based on the determined target value. In this example, the vehicle acceleration target determination block 47 receives as an input the score 59 from the score calculation block 57 or the rate-limited score 59' from the rate limiter block 61. The vehicle acceleration target determination block 47 is configured to determine a target value for vehicle acceleration using a predefined relationship between at least the score 59 or rate-limited score 59' and vehicle acceleration. The vehicle acceleration target determination block 47 may alternatively receive as an input a score difference between the score 59 or rate-limited score 59' and a predefined score target. The predefined score target may reflect a desired level of vehicle occupant comfort or another user-selectable setting. The vehicle acceleration target determination block 47 is configured to then determine a target value for vehicle acceleration using a predefined relationship between at least the score difference and vehicle acceleration. In either case, the vehicle acceleration target determination block 47 of the FIG 6 example determines a vehicle acceleration request 37 in dependence on the score 59 or the rate-limited score 59'.

FIG 7 illustrates an example of the speed control system 5 which is configured to generate a vehicle acceleration request 37. In this example the speed control system 5 comprises a score calculation block 57, a rate limiter block 61, and a vehicle acceleration target determination block 47.

The score calculation block 57 is configured to determine for a given time step a score 59 in dependence on at least one vehicle body acceleration component 23, or a running average magnitude thereof 45, received as an input at the given time step.

Therefore, at a first time, the score calculation block 57 determines a first score 59" in dependence on the at least one vehicle body acceleration component 23 and likewise, at a second time, the score calculation block 57 determines a second score 59 in dependence on the at least one vehicle body acceleration component 23.

In some but not necessarily all examples the first time precedes the second time. The first time may occur one time step before the second time. One time step may correspond to the sampling period of a vehicle body acceleration component 23.

In some but not necessarily all examples the score 59 is an estimate of occupant comfort. For example the higher the score, the more comfortable the occupant is estimated to be; the lower the score, the less comfortable the occupant is estimated to be. The score 59 may be determined based on a predefined relationship with the at least one vehicle body acceleration component 23, or a running average magnitude thereof 45, derived from experimental data, theoretical modelling, or a combination thereof. The score 59 may reflect the subjective comfort evaluations of test users when subjected to corresponding values/levels of vehicle body acceleration components 23.

In some but not necessarily all examples the score calculation block 57 is configured to receive as inputs multiple vehicle body acceleration components 23A-C, or respective running average magnitudes 45A-C thereof. The score calculation block 57 is configured to determine a score 59 indicative of a combination of the multiple vehicle body acceleration components 23A-C, or respective running average magnitudes 45A-C thereof. In some but not necessarily all examples combining the multiple vehicle body acceleration components 23A-C, or respective running average magnitudes 45A-C thereof comprises applying different weights to the different vehicle body acceleration components 23A-C, or respective running average magnitudes 45A-C thereof. The different weights may reflect perceivable effects of the vehicle body acceleration components 23A-C on an occupant of the vehicle 1. The different weights may be derived from experimental data, theoretical modelling, or a combination thereof. The different weights may be fine-tuned to fit test users' subjective comfort evaluations when subjected to these accelerations. In some but not necessarily all examples combining the multiple vehicle body acceleration components 23A-C, or respective running average magnitudes 45A-C thereof comprises calculating a weighted root mean square, wherein the different weights are applied in respect of different vehicle body acceleration components 23A-C, or respective running average magnitudes 45A-C thereof.

As described before, the score 59 is a measure of occupant comfort. The higher the score 59, the more comfortable the occupant; the lower the score 59, the less comfortable the occupant. Higher scores bias the vehicle 1 towards speeding up. As the vehicle 1 speeds up, the score 59 is more likely to drop. Lower scores 59 bias the vehicle 1 towards slowing down. As the vehicle 1 slows down, the score 59 is likely to increase. To prevent the score 59 constantly fluctuating around a predefined target score and, thus, the vehicle's speed from constantly fluctuating, the rate limiter block 61 applies rate limiting to the score 59. Implementing rate limiting, however, makes the vehicle 1 slow to react to changes in roughness of driving surface or changes in occupant comfort, particularly when the rate limits are fixed. Whether or not a slow reaction is desirable depends on the vehicle speed 23 and in some examples on the direction in which the score 59 is changing, i.e., whether it is increasing or decreasing.

In this example the rate limiter block 61 comprises a dynamic rate limiter block 63, a delay block 65, an upper limit calculation block 67, and a lower limit calculation block 71.

The dynamic rate limiter block 63 is configured to determine whether a score 59 output from the score calculation block 57 at a given time step is within a permitted score range, and if so to output a rate limited score 59' for the given time step which is equal to the input score 59, and if not to output a rate-limited score 59' for the given time step which is equal to an endpoint of the permitted score range that is closest to the input score 59. The dynamic rate limiter block 63 is configured with a permitted score range which can vary from time step to time step. This time-variable permitted score range is configured by the following inputs: an output of the dynamic rate limiter block 63 from a previous time step (i.e., a previous rate-limited score 59"), received via the delay block 65; a positive rate limit 69, calculated for the given time step by the upper limit calculation block 67; and a negative rate limit 73, calculated for the given time step by the lower limit calculation block 71. An upper endpoint of the permitted score range is given by the previous rate-limited score 59" plus the change permitted by the positive rate limit 69. A lower endpoint of the permitted score range is given by the previous rate-limited score 59" minus the change permitted by the negative rate limit 73.

The delay block 65 is configured to receive as an input an output from dynamic rate limiter block 63 and to hold and delay this input by one or more time steps before releasing it as an input to the dynamic rate limiter block 63. In some but not necessarily all examples the delay block 65 is a unit delay block and is configured to hold and delay an input by one time step before releasing it as an output. In some but not necessarily all examples one time step is equal to the sampling period of the at least one vehicle body acceleration component 23.

The upper and lower limit calculation blocks 67, 71 are each configured to receive as inputs a current sample value of the vehicle speed 27. They are respectively configured to determine the positive rate limit 69 and the negative rate limit 73 in dependence on the current sample value of the vehicle speed 27.

The upper limit calculation block 67 is configured with a predefined relationship between vehicle speed 27 and positive rate limit 69. In some but not necessarily all examples the predefined relationship is expressed in the form of a lookup table comprising breakpoints for vehicle speed 27 and table data indicative of positive rate limit 69. That is, the lookup table comprises a set of values for vehicle speed 27 to which a corresponding positive rate limit 69 is mapped. The upper limit calculation block 67 is configured to perform a lookup operation in respect of the lookup table using the current vehicle speed 27 to retrieve a corresponding value for the positive rate limit 69. The upper limit calculation block 67 may be configured to estimate a value for the positive rate limit 69 via interpolation of the table data if the current vehicle speed 27 is not an explicitly defined breakpoint.

FIG 8 illustrates a graphical representation of the predefined relationship between vehicle speed 27 (plotted on the x-axis) and positive rate limit 69 (plotted on the y-axis) in some, but not necessarily all examples.

In this example the predefined relationship comprises, for a first range of vehicle speeds 75, an increase in the positive rate limit 69 as vehicle speed 27 increases. Accordingly, for the first range of vehicle speeds 75, as vehicle speed 27 increases, the upper endpoint of the permitted score range configured at the dynamic rate limiter block 63 becomes further from the previous rate-limited score 59". That is, for the first range of vehicle speeds 75, as vehicle speed 27 increases, a difference between the upper endpoint of the permitted score range and the previous rate-limited score 59" increases in magnitude.

In this example the predefined relationship comprises, for a second range of vehicle speeds 77, which is contiguous with and higher than the first range 75, a decrease in the positive rate limit 69 as vehicle speed 27 increases. Accordingly, for the second range of vehicle speeds 77, as vehicle speed 27 increases, the upper endpoint of the permitted score range configured at the dynamic rate limiter block 63 becomes closer to the previous rate-limited score 59". That is, for the second range of vehicle speeds 77, as vehicle speed 27 increases, the difference between the upper endpoint of the permitted score range and the previous rate-limited score 59" decreases in magnitude.

The positive rate limit 69 enables the vehicle 1 to get back up to speed quickly when the score 59 is increasing but prevents the vehicle 1 from accelerating too aggressively from low speeds, which can be disconcerting and inadvisable as there may not be certainty that the challenging terrain has ended. If the vehicle 1 is already at higher speeds, the vehicle 1 does not need to pick up more speed more quickly so the positive rate limit 69 supresses the rate at which the score 59 can increase in such circumstance.

It should be noted that the first and second ranges 75 and 77 are not related to the previously described first and second ranges 53 and 55.

Returning to FIG 7, the lower limit calculation block 71 is configured with a predefined relationship between vehicle speed 27 and negative rate limit 73. In some but not necessarily all examples the predefined relationship is expressed in the form of a lookup table comprising breakpoints for vehicle speed 27 and table data indicative of negative rate limit 73. That is, the lookup table comprises a set of values for vehicle speed 27 to which a corresponding negative rate limit 73 is mapped. The lower limit calculation block 71 is configured to perform a lookup operation in respect of the lookup table using the current vehicle speed 27 to retrieve a corresponding value for the negative rate limit 73. The lower limit calculation block 71 may be configured to estimate a value for the negative rate limit 73 interpolation of the table data if the current vehicle speed 27 is not an explicitly defined breakpoint.

FIG 9 illustrates a graphical representation of the predefined relationship between vehicle speed 27 (plotted on the x-axis) and negative rate limit 73 (plotted on the y-axis) in some, but not necessarily all examples.

In this example the predefined relationship comprises, an increase in the negative rate limit 73 as vehicle speed 27 increases. Accordingly, as vehicle speed 27 increases, the lower endpoint of the permitted score range configured at the dynamic rate limiter block 63 becomes further from the previous rate-limited score 59". That is, as vehicle speed 27 increases, a difference between the lower endpoint of the permitted score range and the previous rate-limited score 59" increases in magnitude.

This enables the vehicle 1 to decelerate quicker from higher speeds in order to quickly reestablish occupant comfort within acceptable bounds.

Returning to FIG 7, it will therefore be appreciated that the permitted score range configured at the dynamic rate limiter block 63 is dependent on the vehicle speed 27. For different vehicle speeds 27, at least where all other parameters are equal, there are different permitted score ranges. The different permitted score ranges may differ in terms of one or more of: (i) a magnitude of the permitted score range i.e., a magnitude of the difference between its upper and lower endpoints; (ii) a relative position of the previous rate-limited score 59" within the permitted score range i.e., the relative position of the previous rate-limited score 59" with respect to the upper and lower endpoints. That is, for a given value of the previous rate-limited score 59", the permitted score range differs at different vehicle speeds 27.

The vehicle acceleration target determination block 47 is configured to determine a target value for vehicle acceleration and output a vehicle acceleration request 37 based on the determined target value. In this example, the vehicle acceleration target determination block 47 receives as an input the rate-limited score 59' from the rate limiter block 61, or specifically from the dynamic rate limiter block 63. The vehicle acceleration target determination block 47 is configured to determine a target value for vehicle acceleration using a predefined relationship between at least the rate-limited score 59' and vehicle acceleration. The vehicle acceleration target determination block 47 may alternatively receive as an input a score difference between the rate-limited score 59' and a predefined score target. The predefined score target may reflect a desired level of vehicle occupant comfort or another user-selectable setting. The vehicle acceleration target determination block 47 is configured to then determine a target value for vehicle acceleration using a predefined relationship between at least the score difference and vehicle acceleration. In either case, the vehicle acceleration target determination block 47 of the FIG 6 example determines a vehicle acceleration request 37 in dependence on the rate-limited score 59'.

FIG 10 illustrates a variation on the example of FIG 7 in which the positive and negative rate limits 69, 73 (and thus also the permitted score range configured at the dynamic rate limiter block 63) depend additionally on a difference 81 between the previous rate-limited score 59" and the current (non-rate-limited) score 59, hereinafter simply referred to as "difference 81".

The rate limiter block 61 of the FIG 10 example additionally comprises a subtraction block 79 which is configured to perform subtraction between its inputs and output the result. The subtraction block 79 receives as inputs the previous rate-limited score 59" and the current (non-rate-limited) score 59 and is configured to subtract the current (non-rate-limited) score 59 from the previous rate-limited score 59". The subtraction block 79 is therefore configured to output the difference 81.

The upper and lower limit calculation blocks 67, 71 of the FIG 10 example are each additionally configured to receive as inputs the difference 81. They are respectively configured to determine the positive rate limit 69 and the negative rate limit 73 in dependence on the current sample value of the vehicle speed 27 and the difference 81.

The upper limit calculation block 67 is configured with a predefined relationship between (i) vehicle speed 27, (ii) difference 81, and (iii) positive rate limit 69. In some but not necessarily all examples the predefined relationship is expressed in the form of a two-dimensional lookup table comprising breakpoints for vehicle speed 27 which index a first dimension of the lookup table, breakpoints for difference 81 which index a second dimension of the lookup table, and table data indicative of positive rate limit 69.

The lower limit calculation block 71 is configured with a predefined relationship between (i) vehicle speed 27, (ii) difference 81, and (iii) negative rate limit 73. In some but not necessarily all examples the predefined relationship is expressed in the form of a two-dimensional lookup table comprising breakpoints for vehicle speed 27 which index a first dimension of the lookup table, breakpoints for difference 81 which index a second dimension of the lookup table, and table data indicative of negative rate limit 73.

For each vehicle speed 27, there is an interval 87 around the previous rate-limited score 59" and if the current (non-rate-limited) score 59 falls within this interval 87, it effectively won't be subject to any limiting. When the current (non-rate-limited) score 59 is outside of that interval 87 however, the limit that is applied to the current (non-rate-limited) score 59 by the dynamic rate limiter block 63 to produce the rate-limited score 59' is dependent on how far outside the interval 87 the current (non-rate-limited) score 59 is.

Or said differently, in terms of the difference 81, there are upper and lower threshold values (the endpoints of the interval 87) which trigger the application of a limit to the current (non-rate-limited) score 59. These thresholds depend on vehicle speed 27. In particular the upper threshold has the same relationship to vehicle speed 27 as the positive rate limit 69 shown in FIG 8 and the lower threshold has the same relationship to vehicle speed 27 as the negative rate limit 73 shown in FIG 9. The limit applied to the current (non-rate-limited) score 59 has a relationship to the extent by which the thresholds are exceeded. There are different relationships at different vehicle speeds 27.

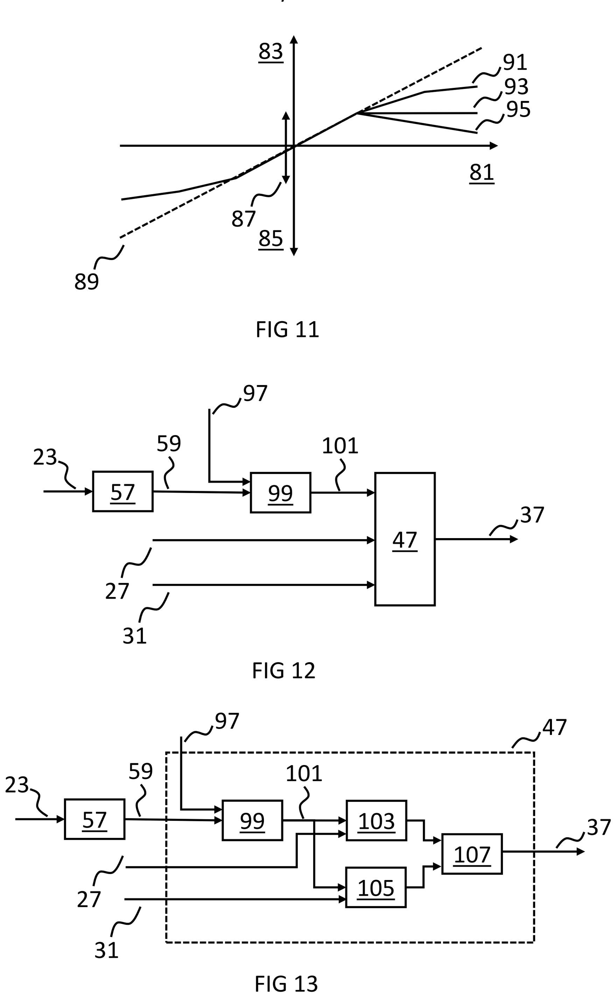

FIG 11 illustrates a graphical representation of the difference 81 (plotted on the x-axis) with respect to the difference between the upper endpoint of the permitted score range and the previous rate-limited score 59" (plotted as parameter 83 on the positive y-axis) and with respect to the difference between the lower endpoint of the permitted score range and the previous rate-limited score 59" (plotted as parameter 85 on the negative y-axis) in some but not necessarily all examples.

Within the interval 87, the endpoints of the permitted score range increase in a 1-to-1 relationship with the difference 81. The score 59 is therefore effectively subjected to no limiting by the dynamic rate limiter block 63 in the production of the rate-limited score 59'.

Outside of the interval 87, the endpoints of the permitted score range diverge from the 1-to-1 relationship with the difference 81 (which is illustrated in FIG 11 by divergence from the dashed line 89 representing the 1-to-1 relationship i.e., x=y).

Where difference 81 is increasingly negative, the difference 85 between the lower endpoint of the permitted score range and the previous rate-limited score 59" continues to increases in magnitude. However, the difference 85 between a lower endpoint of the permitted score range and the previous rate-limited score 59" increases in magnitude less than the difference 81 increases in magnitude. For example, if the lower endpoint of the interval 87 is at -0.8 then when difference 81 is -0.8, difference 85 may be be -0.8. Then when difference 81 is -1.5, difference 85 may increase in magnitude but only to -1, and when difference 81 is -2.5, difference 85 may increases in magnitude again but only to -1.2.

The increase in magnitude of the difference 85 between the lower endpoint of the permitted score range and the previous rate-limited score 59" as difference 81 is becomes increasingly negative may hold for all vehicle speeds 27. However, the extent to which the difference 85 between a lower endpoint of the permitted score range and the previous rate-limited score 59" increases in magnitude less than the difference 81 increases in magnitude may vary between vehicle speeds 27.

Where difference 81 is increasingly positive, the difference 83 between the upper endpoint of the permitted score range and the previous rate-limited score 59" continues to increases in magnitude for the first range of vehicle speeds 75 and in some examples for a first part of the second range of vehicle speeds 77. This is shown by solid line 91.

For a second part of the second range of vehicle speeds 77, which is higher than the first part, as difference 81 becomes increasingly positive, the difference 83 between the upper endpoint of the permitted score range and the previous rate-limited score 59" may remain consistent as shown by solid line 93 or decreases in magnitude as shown by solid line 95.

FIG 12 illustrates an example of the speed control system 5 which is configured to generate a vehicle acceleration request 37. In this example the speed control system 5 comprises a score calculation block 57, a score difference determination block 99 and a vehicle acceleration target determination block 47.

The score calculation block 57 is as described in relation to FIG 6 or FIG 7. Though not shown in FIG 12, in this example the score calculation block may optionally be followed by a rate limiter block 61 as described in relation to FIG 6, FIG 7, or FIG 10.

The score difference determination block 99 is a subtraction block which is configured to perform subtraction between its inputs and output the result. The score difference determination block 99 receives as inputs a predefined score target 97 and either the score 59 or the rate-limited score 59' and is configured to subtract the score 59 or the rate-limited score 59' from the predefined score target 97 to determine a score difference 101. The score difference determination block 99 is therefore configured to output the score difference 101.

The predefined score target 97 may reflect a desired level of vehicle occupant comfort or another user-selectable setting.

The vehicle acceleration target determination block 47 is configured to determine a target value for vehicle acceleration and output a vehicle acceleration request 37 based on the determined target value. In this example, the vehicle acceleration target determination block 47 receives as an input the score difference 101 from the score difference determination block 99. In this example, the vehicle acceleration target determination block 47 receives as further inputs a current sample value of the vehicle speed 27 and a current estimation of the driving surface gradient 31. The vehicle acceleration target determination block 47 is configured to determine a target value for vehicle acceleration using a predefined relationship between (i) the score difference 101, (ii) the vehicle speed 27, (iii) the driving surface gradient 31, and (iv) vehicle acceleration.

In a variation on the FIG 12 example the vehicle acceleration target determination block 47 may receive as a further input a current sample value of the vehicle speed 27 but not a current estimation of the driving surface gradient 31. In this variation the vehicle acceleration target determination block 47 is configured to determine a target value for vehicle acceleration using a predefined relationship between (i) the score difference 101, (ii) the vehicle speed 27, and (iii) vehicle acceleration.

In a further variation on the FIG 12 example the vehicle acceleration target determination block 47 may receive as a further input a current estimation of the driving surface gradient 31 but not a current sample value of the vehicle speed 27. In this further variation the vehicle acceleration target determination block 47 is configured to determine a target value for vehicle acceleration using a predefined relationship between (i) the score difference 101, (ii) the driving surface gradient 31, and (iii) vehicle acceleration.

In some but not necessarily all examples the predefined relationship is expressed in the form of a multi-dimensional lookup table comprising (i) breakpoints for score difference 101 which index a first dimension of the lookup table, (ii) breakpoints for vehicle speed 27 which index a second dimension of the lookup table and/or breakpoints for driving surface gradient 31 which index either the second dimension of the lookup table or a third dimension of the lookup table, and (iii) table data indicative of vehicle acceleration. That is, the lookup table comprises sets of values for (i) score difference 101 and (ii) vehicle speed 27 and or driving surface gradient 31 to which corresponding vehicle accelerations are mapped. The vehicle acceleration target determination block 47 is configured to perform a lookup operation in respect of the lookup table using the current inputs to the block 47 to retrieve a corresponding value for the vehicle acceleration as a target value and to then generate and output the vehicle acceleration request 37 based on the target value. The vehicle acceleration target determination block 47 may be configured to estimate a target value for the vehicle acceleration via interpolation of the table data if the current inputs to the block 47 are not explicitly defined breakpoints.

The predefined relationship defines a unified multivariate dependency between vehicle acceleration and the score difference 101 and the vehicle speed 27 and/or the driving surface gradient 31. This enables improved modelling of the interdependencies between these parameters. For example if the target value for vehicle acceleration was only ever reacting to the most severe amongst the score difference 101 and the vehicle speed 27 and/or the driving surface gradient 31, this may be an over- or under-reaction depending on the severity of the other two parameters.

In a variation on the FIG 12 example the vehicle acceleration target determination block 47 the predefined relationship is expressed in the form of two or more lookup tables, the outputs of which are combined to determine a target value for the vehicle acceleration. An example of such a variation is illustrated in FIG 13.

In the FIG 13 example the vehicle acceleration target determination block 47 comprises a speed-related target determination block 103, a gradient-related target determination block 105, and a summation block 107.

The speed-related target determination block 103 receives as inputs the score difference 101 and a current sample value of the vehicle speed 27. The speed-related target determination block 103 is configured with a predefined relationship between (i) the score difference 101, (ii) the vehicle speed 27, and (iii) vehicle acceleration expressed in the form of a two-dimensional lookup table comprising i) breakpoints for score difference 101 which index a first dimension of the lookup table, (ii) breakpoints for vehicle speed 27 which index a second dimension of the lookup table, and (iii) table data indicative of vehicle acceleration.

The gradient-related target determination block 105 receives as inputs the score difference 101 and a current estimation of the driving surface gradient 31. The gradient-related target determination block 105 is configured with a predefined relationship between (i) the score difference 101, (ii) the driving surface gradient 31, and (iii) vehicle acceleration expressed in the form of a two-dimensional lookup table comprising i) breakpoints for score difference 101 which index a first dimension of the lookup table, (ii) breakpoints for driving surface gradient 31 which index a second dimension of the lookup table, and (iii) table data indicative of vehicle acceleration.

The summation block 107 is configured to perform summation between its inputs and output the result. The summation block 107 receives as inputs the two target values of vehicle acceleration respectively retrieved from the table data in each of the speed-related target determination block 103 and the gradient-related target determination block 105 based on their current inputs. The summation block 107 is configured to sum these two target values of vehicle acceleration to produce a final target value for vehicle acceleration upon which the vehicle acceleration request 37 is based.

It will be appreciated that the speed-related target determination block 103 may express a predefined relationship between (i) the score difference 101, (ii) the vehicle speed 27, and (iii) vehicle acceleration in a form other than that of a two-dimensional lookup table.

Likewise it will be appreciated that the gradient-related target determination block 105 may express a predefined relationship between (i) the score difference 101, (ii) the driving surface gradient 31, and (iii) vehicle acceleration in a form other than that of a two-dimensional lookup table.

It will be appreciated that the speed-related target determination block 103 and the gradient-related target determination block 105 may be configured to determined target values of vehicle acceleration designed to be averaged or otherwise interpolated rather than summed in order to determine a final target value for vehicle acceleration upon which the vehicle acceleration request 37 is based. In that case the summation block 107 may be replaced by a suitable interpolation block.

In another example of such a variation, the vehicle acceleration target determination block 47 can comprise: a base target determination block configured with a predefined relationship between the score difference 101 and vehicle acceleration; a speed-related adjustment target determination block configured with a predefined relationship between (i) the score difference 101, (ii) the vehicle speed 27, and (iii) a vehicle acceleration adjustment amount; and a gradient-related adjustment target determination block configured with a predefined relationship between (i) the score difference 101, (ii) the driving surface gradient 31, and (iii) a vehicle acceleration adjustment amount. In this example the vehicle acceleration determined by the base target determination block can be summed with the two vehicle acceleration adjustment amounts determined respectively by the speed-related adjustment target determination block and the gradient-related adjustment target determination block to produce a final target value for vehicle acceleration upon which the vehicle acceleration request 37 is based.

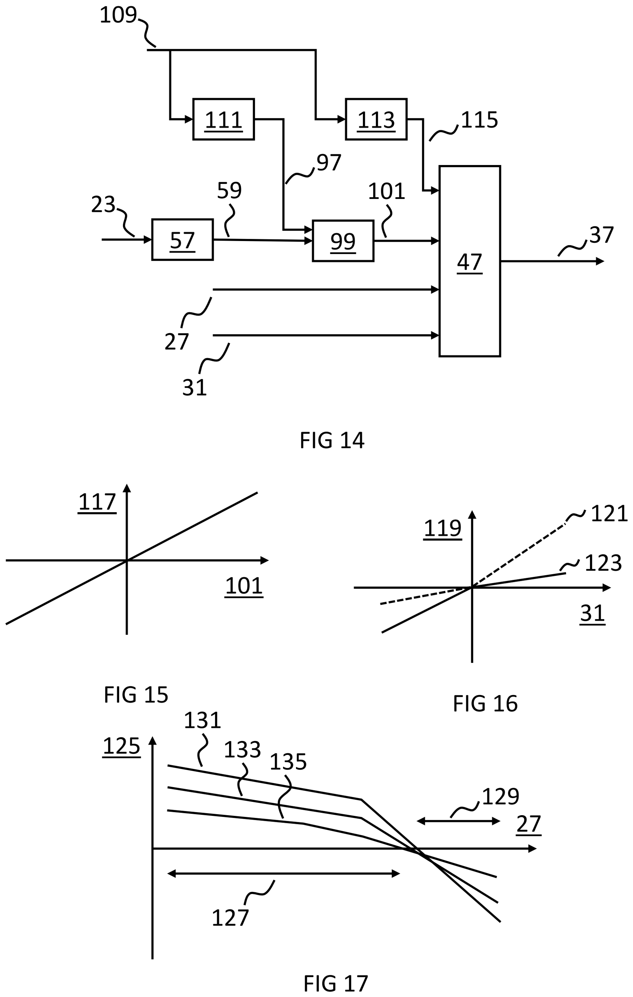

In some but not necessarily all examples the target value for vehicle acceleration, upon which the vehicle acceleration request 37 is based, is made dependent on a user-selected setting 109, such as, for example, a ride comfort setting for the vehicle 1. An example is illustrated in FIG 14.

In the FIG 14 example the speed control system 5 comprises a score target determination block 111 which is configured to receive as an input the user-selected setting 109 and to determine the predefined score target 97 in dependence on the user-selected setting 109.

In the FIG 14 example the speed control system 5 comprises a relationship selection block 113 which is configured to receive as an input the user-selected setting 109 and to select the predefined relationship with which the vehicle acceleration target determination block 47 is to be configured in dependence on the user-selected setting 109. In this example, there are different predefined relationships stored in associated with different user-selected settings 109. The relationship selection block 113 is configured to output an indication 115 of this selection to the vehicle acceleration target determination block 47.

In the FIG 14 example the vehicle acceleration target determination block 47 is then configured obtain the selected predefined relationship between (i) the score difference, (ii) the vehicle speed and/or the driving surface gradient, and (iii) vehicle acceleration, and utilise the selected predefined relationship to determine the target value for the vehicle acceleration.

It will be appreciated that where the vehicle acceleration target determination block 47 comprises two or more predefined relationships between different subsets of the (i) the score difference, (ii) the vehicle speed and/or the driving surface gradient, and (iii) vehicle acceleration, as in the FIG 13 example, the relationship selection block 113 may be configured to select each of the two or more predefined relationships in dependence on the user-selected setting 109 and output each selection 115 to the vehicle acceleration target determination block 47 and the vehicle acceleration target determination block 47 is configured to obtain each of the selected predefined relationships and utilise these to determine the target value for the vehicle acceleration.

In a variation on the FIG 14 example the relationship selection block 113 may be omitted and the vehicle acceleration target determination block 47 may receive the user-selected setting 109 as a direct input. In such a variation, the vehicle acceleration target determination block 47 can alternatively configured with an additional dimension to the or each lookup table. For example, the or each lookup table may comprise breakpoints for the user-selected setting which index the additional dimension of the or each lookup table.

It will be appreciated that although the score target determination block 111, the relationship selection block 113, and, in a variation, the vehicle acceleration target determination block 47 have been described as responding to a user-selected setting 109, in some examples they may alternatively respond to a vehicle-selected setting. For example, a ride comfort setting may in some examples be determined automatically by the vehicle 1 rather than selected by a user, for example based upon previous driver behaviour.

FIGs 15 to 17 are now provided to illustrate graphical representations of some but not necessarily all examples of the predefined relationship with which the vehicle acceleration target determination block 47 is configured. In the interest of clarity, each FIG respectively shows the effect that one of the score difference 101, the driving surface gradient 31, and the vehicle speed 27 have on the target value for vehicle acceleration

It will be appreciated that the effects may vary for different user-selected settings 109 but FIGs 15 to 17 can be thought of as illustrating examples of general trends that are common across different user-selected settings 109.

FIG 15 plots score difference 101 on the x-axis against an example of the effect 117 that this has on the target value for vehicle acceleration on the y-axis.

As illustrated the effect 117 of a positive score difference 101 on the target value for vehicle acceleration is that the target value for vehicle acceleration is increased. The effect 117 of a negative score difference 101 on the target value for vehicle acceleration is that the target value for vehicle acceleration is decreased. The effect 117 of a shift in the score difference 101 in a more positive or less negative direction is an increase in the target value for vehicle acceleration.

FIG 16 plots driving surface gradient 31 on the x-axis against an example of the effect 119 that this has on the target value for vehicle acceleration on the y-axis.

The dashed line 121 represents an example where the score difference 101 is positive and the solid line 123 represents an example where the score difference 101 is negative.

In both examples, as illustrated, the driving surface gradient 31 corresponding to an uphill (positive) gradient has a more positive effect 119 than when the driving surface gradient 31 corresponds to a downhill (negative) gradient. The driving surface gradient 31 corresponding to an uphill (positive) gradient has the effect 119 of increasing the target value for vehicle acceleration. Steeper uphill (positive) gradients have the effect 119 of greater increases in the target value for vehicle acceleration. The driving surface gradient 31 corresponding to a downhill (negative) gradient may have the effect 119 of decreasing the target value for vehicle acceleration. Steeper downhill (negative) gradients may have the effect 119 of greater decreases in the target value for vehicle acceleration..

The combination of a positive score difference 101 with an uphill (positive) gradient 31 has a more positive effect 119 on the target value for vehicle acceleration than the combination of a negative score difference 101 with the same uphill (positive) gradient 31. For a given uphill (positive) gradient 31 the effect 119 of a shift in the score difference 101 in a more positive or less negative direction is an increase in the target value for vehicle acceleration.

The combination of a positive score difference 101 with a downhill (negative) gradient 31 has a less negative effect 119 on the target value for vehicle acceleration than the combination of a negative score difference 101 with the same downhill (negative) gradient 31. For a given downhill (negative) gradient 31 the effect 119 of a shift in the score difference 101 in a less positive or more negative direction is a decrease in the target value for vehicle acceleration.

This provides for acceleration to be boosted when going uphill (at least provided that the driving surface is not getting rougher) to enable the vehicle 1 to have the momentum to overcome roughness or obstacles it may subsequently encounter which could otherwise rob it of momentum and bring it to a halt or to a slow enough speed that further speed control becomes challenging.

This also provides for acceleration to be reduced when going downhill (at least if the driving surface is getting rougher) because the effect of roughness or obstacles being encountered without the vehicle 1 slowing is that the vehicle 1 can feel like it is "running away" i.e., that the speed control system 5 is not properly in control of the vehicle's speed, which the driver may find perturbing.

FIG 17 plots vehicle speed 27 on the x-axis against an example of the effect 125 that this has on the target value for vehicle acceleration on the y-axis.

The solid line 131, the dashed line 133, and dotted line 135 respectively represent examples where the score difference 101 is positive but of successively decreasing magnitude. That is, of these examples, the solid line 131 represents an example with the highest positive score difference 101, the dotted line 135 represents an example with the lowest positive the score difference 101, and the dashed line 133 represents an example with a middling positive score difference 101.

When the vehicle speed 27 is within a first range of speeds 127, all of the examples with positive score differences 101 have the effect 125 of increasing the target value for vehicle acceleration. That is, the effect 125 is a bias towards positive acceleration.

Within the first range 127, the effect 125 of lower vehicle speed 27 is a greater increase in the target value for vehicle acceleration. That is, through the first range 127, as vehicle speed 27 increases, it has less effect 125 on the target value of vehicle acceleration. The bias towards positive acceleration is greater at low vehicle speeds 27.

Within the first range 127, the effect 125 of higher positive score differences 101 is a greater increase in the target value for vehicle acceleration. The bias towards positive acceleration is greater at high positive score differences 101.

When the vehicle speed 27 is within a second range of speeds 129, which is higher and in some examples narrower than the first range 127 of speeds, the effect 125 on the target value for vehicle acceleration is to decrease the target value. That is, the effect 125 is a bias toward deceleration.

Within the second range 129, the effect 125 of higher vehicle speed 27 is a greater decrease in the target value for vehicle acceleration. That is, through the second range 129, as vehicle speed 27 increases, it has more effect 125 on the target value of vehicle acceleration. The bias towards deceleration is greater at high vehicle speeds 27.

Within the second range 129, the effect 125 of higher positive score differences 101 is a greater decrease in the target value for vehicle acceleration. The bias towards deceleration is greater at high positive score differences 101.

The effect 125 of vehicle speed 27 on the target value for vehicle acceleration may be low when the score difference 101 is zero or negative.

It should be noted that the first and second ranges 127 and 129 may or may not be contiguous. It should further be noted that the first and second ranges 127 and 129 are not related to the previously described first and second ranges 53 and 55 nor to the previously described first and second ranges 75 and 77.

This provides for acceleration to be boosted at low speeds (except over the roughest driving surfaces) in order to have some speed in reserve in case obstacles are encountered that need a bit of momentum to roll over.

This also provides for acceleration to be reduced at high speeds so that the vehicle 1 does not pick up more speed.

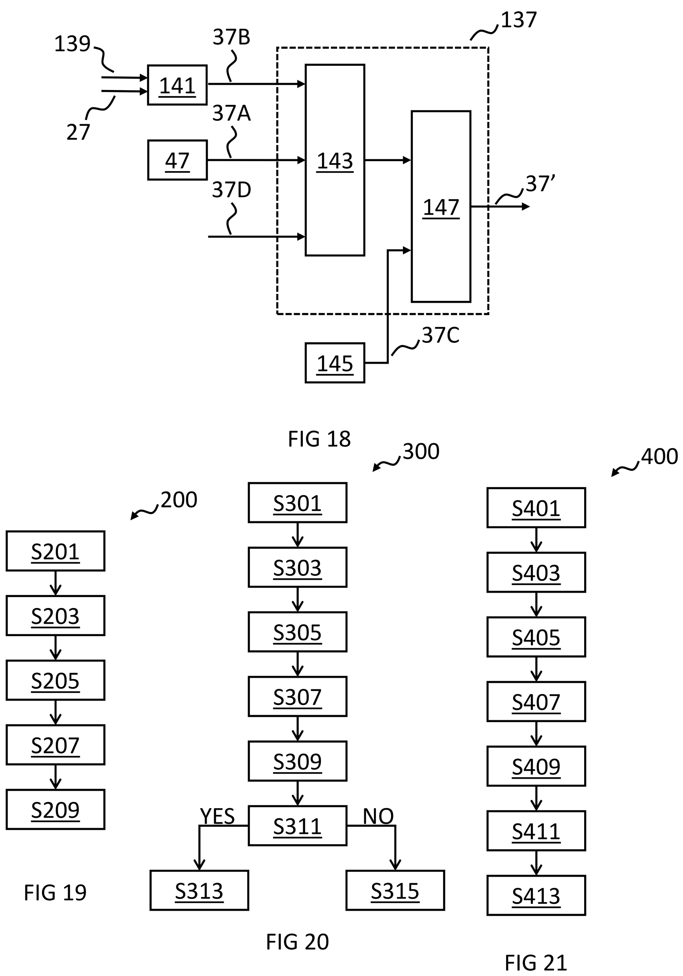

FIG 18 illustrates an example of any of the previously described speed control systems 5 in which the vehicle acceleration request 37 output by the vehicle acceleration target determination block 47 is input into an arbitration block 137.

The arbitration block 137 is configured to receive multiple individual vehicle acceleration requests 37A-D, a first of which is the request 37A output from the vehicle acceleration target determination block 47 previously described, and the others of which have different origins. The arbitration block 137 is configured to process the multiple individual vehicle acceleration requests 37A-D and output a final arbitrated vehicle acceleration request 37'.

The origin of a second vehicle acceleration request 37B is a non-adaptive speed control block 141. The non-adaptive speed control block 141 is configured to receive as inputs a current sample value of the vehicle speed 27 and a cruise control speed setpoint 139. The cruise control speed setpoint 139 may be set by a user when activating the speed control system 5. The non-adaptive speed control block 141 is configured to determine the second vehicle acceleration request 37B in dependence on a difference between a current sample value of the vehicle speed 27 and the cruise control speed setpoint 139. The non-adaptive speed control block 141 is configured to determine the second vehicle acceleration request 37B in such a way as to maintain the vehicle speed 27 at the cruise control speed setpoint 139 or to bring the vehicle speed 27 back to the cruise control speed setpoint 139.

The origin of a third vehicle acceleration request 37C is a minimum speed protection block 145. The minimum speed protection block 145 is configured to calculate the vehicle acceleration required to prevent the vehicle speed dropping below a threshold speed, for example 2-2.5 km/h, below which control of the vehicle's speed can becomes challenging. For example below this threshold speed, the noise level of wheel speed sensors can make it hard to reliably determine the vehicle speed 27. Given, for example, that the first and second vehicle acceleration requests 37A, 37B are dependent on vehicle speed 27, it will be appreciated that the speed control system 5 benefits from reliable determination of the vehicle speed 27. Additionally, below this threshold speed, even small amounts of braking in the course of meeting a vehicle acceleration request can quickly stop the vehicle 1. Disturbances such as potholes or rocks can also quickly stop the vehicle 1. Furthermore the powertrain 33 and the braking system 35 may have non-linear response below the threshold speed and so it is challenging to control the vehicle's speed using them in a predictable and/or consistent manner.

The origin of any fourth and further vehicle acceleration requests 37D may be respective adaptive speed control blocks. These may be configured to request vehicle accelerations which would adapt the vehicle's speed to below the cruise control speed setpoint 139 when challenging driving condition are encountered such as a loose driving surface, cresting a rise where vision beyond the rise is obstructed, articulated surfaces, side slopes, and the like.

The arbitration block 137 comprises a minimum magnitude selector block 143. All except the third vehicle acceleration request 37C are input into the minimum magnitude selector block 143 and the request which is for the lowest vehicle acceleration is output. Since the second vehicle acceleration request 37B is input into this minimum magnitude selector block 143 along with the other vehicle acceleration requests 37A, 37D, the effect of the arbitration performed by this block 143 is to modulate the vehicle's speed below the cruise control speed setpoint 139 when, for example, the at least one vehicle body acceleration component 23 is indicative of driving over a rough surface or over a disturbance in an otherwise generally smooth surface, for example.

The arbitration block 137 also comprises a maximum magnitude selector block 147. The maximum magnitude selector block 147 is configured to receive as inputs the output from the minimum magnitude selector block 143 and the third vehicle acceleration request 37C output from the minimum speed protection block 145. Between these two inputs, the request which is for the highest vehicle acceleration is output. This ensures that the final arbitrated vehicle acceleration request 37' is sufficient to keep vehicle's speed above the aforementioned threshold speed and accordingly to ensure that the vehicle's speed can be controlled in a predictable and/or consistent manner.

The blocks illustrated in FIGs 3, 4, 6, 7, 10, 12, 13, 14, and 18 may represent sections of code in the computer program 19.

FIG 19 illustrates a method 200 according to an embodiment of the invention. The method 200 is a method of controlling a speed of a vehicle 1, such as the vehicle 1 illustrated in FIG 1. The method 200 may be performed by the speed control system 5 illustrated in FIG 2A. In particular, the memory 17 may comprise computer-readable instructions 19 which, when executed by the processor 15, perform the method 200.

Step S201 comprises receiving an indication of a vehicle speed 27.

Step S203 comprises receiving an indication of at least one vehicle body acceleration component 23.

In some but not necessarily all examples of step S203 multiple vehicle body acceleration components 23A-C are received. Different vehicle body acceleration components 23A-C correspond to different degrees of freedom of movement of a body of the vehicle 1. The different vehicle body acceleration components 23A-C may be heave, pitch, and roll accelerations experienced by the vehicle body.

Step S205 comprises determining a sampling window having a window length 43 dependent on the vehicle speed 27.

For a first range 53 of vehicle speeds, as the vehicle speed 27 increases sampling windows are determined having longer window lengths 43.

In some but not necessarily all examples the first range 53 of vehicle speeds comprises all possible vehicle speeds or at least all possible vehicle speeds at which the speed control system 5 is operational. Accordingly, in such examples, the window length 43 increases as the vehicle speed 27 increases.

In some but not necessarily all examples the predefined range of speeds in which the speed control system 5 is operational comprises a second range 55 of speeds in addition to the first range 53 of speeds. The second range 55 of speeds is lower and in some examples narrower than the first range 53 of speeds The first and second ranges 53, 55 of vehicle speeds may be contiguous. For the second range 55 of speeds, as the vehicle speed 27 decreases sampling windows are determined having longer window lengths 43. A maximum window length 43 for the first range 53 of vehicle speeds is longer than a maximum window length 43 for the second range 55 of vehicle speeds.

In some but not necessarily all examples of step S205 the sampling window is determined using a lookup table comprising breakpoints for vehicle speed 27 and table data indicative of window length 43.

Step S207 comprises calculating a running average magnitude 45 of the at least one vehicle body acceleration component 23 over the determined sampling window.

In some but not necessarily all examples of step S207 the calculation of the running average magnitude 45 of the at least one vehicle body acceleration component 23 is recursive and comprises a weighted summation of a new data point for the at least one vehicle body acceleration component 23 with a running average magnitude 45' of the at least one vehicle body acceleration component 23 at a previous time step, wherein weights used in the weighted summation vary in dependence on the window length 43 of the determined sampling window.

In some but not necessarily all examples of step S207 respective running average magnitudes 45A-C are calculated for each of the multiple vehicle body acceleration components 23A-C over the determined sampling window, assuming that indications of multiple vehicle body acceleration components 23A-C are received in step S203.

In such examples step S207 may be followed by an additional (unillustrated) step of determining a score 59 indicative of a combination of the respective running average magnitudes 45A-C for the multiple vehicle body acceleration components 23A-C. Combining the respective running average magnitudes 45A-C for the multiple vehicle body acceleration components 23A-C may comprise applying different weights to the running average magnitudes 45A-C of different vehicle body acceleration components 23A-C. The different weights may reflect perceivable effects of the vehicle body acceleration components on an occupant of the vehicle 1.

A further additional (unillustrated) step of applying rate limiting to the score 59 to limit a rate at which the score 59 can change over time may be performed in some but not necessarily all examples. The rate limiting may apply fixed positive and negative limits on the rate at which the score can change over time or may vary the positive and negative limits 69, 73 based on some parameter(s), for example vehicle speed 27 and a difference 81 between a previous rate-limited score 59" and a current (non-rate-limited) score 59.

A yet further additional (unillustrated) step of determining a score difference 101 between the score 59 or rate-limited score 59' and a predefined score target 97 may be performed in some but not necessarily all examples.

Step S209 comprises generating a vehicle acceleration request 37 which depends on the running average magnitude 45 of the at least one vehicle body acceleration component 23.

In some but not necessarily all examples of step S209 the vehicle acceleration request 37 may be generated instead to depend on the score 59 which can be determined via combination of the respective running average magnitudes 45A-C for the multiple vehicle body acceleration components 23A-C, assuming that indications of multiple vehicle body acceleration components 23A-C are received in step S203.

In some but not necessarily all examples of step S209 the vehicle acceleration request 37 may be generated instead by first determining a target value for vehicle acceleration using a predefined relationship between at least the score difference 101 and vehicle acceleration and then basing the vehicle acceleration request 37 on the determined target value for vehicle acceleration.

If multiple vehicle body acceleration components 23A-C are not used and thus no score 59 to represent or indicate their combination is determined, then instead and in some but not necessarily all examples a difference between the running average magnitude 45 of the vehicle body acceleration component 23 and a predefined target magnitude may be determined and in step S209 the vehicle acceleration request 37 may be generated by first determining a target value for vehicle acceleration using a predefined relationship between at least the determined difference and vehicle acceleration and then basing the vehicle acceleration request 37 on the determined target value for vehicle acceleration.

In some but not necessarily all examples of step S209 the predefined relationship between at least (i) the score difference 101 or the determined difference and (ii) vehicle acceleration may be a predefined relationship between (i) the score difference 101 or the determined difference, (ii) the vehicle speed 27 and/or a driving surface gradient 31, and (iii) vehicle acceleration.

In some but not necessarily all examples step S209 may be followed by an additional (unillustrated) step of arbitration between the vehicle acceleration request 37(A) generated in step S209 and a second and/or a third vehicle acceleration request 37B, 37C, wherein, as a result of the arbitration, an arbitrated vehicle acceleration request 37' is output.

In some but not necessarily all such examples the second vehicle acceleration request 37B is determined in dependence on a difference between the vehicle speed 27 and a cruise control speed setpoint 139. The arbitration between the vehicle acceleration request 37(A) generated in step S209 and the second vehicle acceleration request 37B comprises a minimum magnitude selection.

In some but not necessarily all such examples the third vehicle acceleration request 37C is determined for maintaining vehicle speed 27 above a threshold speed, wherein maintaining the vehicle speed 27 above the threshold speed may be a prerequisite for performance of the method 200. The arbitration between the vehicle acceleration request 37(A) generated in step S209 and the third vehicle acceleration request 37C comprises a maximum magnitude selection.

FIG 20 illustrates another method 300 according to an embodiment of the invention. The method 300 is another method of controlling a speed of a vehicle 1, such as the vehicle 1 illustrated in FIG 1. The method 300 may be performed by the speed control system 5 illustrated in FIG 2A. In particular, the memory 17 may comprise computer-readable instructions 19 which, when executed by the processor 15, perform the method 300.

Step S301 comprises receiving an indication of a vehicle speed 27.

Step S303 comprises receiving an indication of at least one vehicle body acceleration component 23.

In some but not necessarily all examples of step S303 multiple vehicle body acceleration components 23A-C are received. Different vehicle body acceleration components 23A-C correspond to different degrees of freedom of movement of a body of the vehicle 1. The different vehicle body acceleration components 23A-C may be heave, pitch, and roll accelerations experienced by the vehicle body.

Step S305 comprises determining a first score in dependence on the at least one vehicle body acceleration component 23 at a first time.

In some but not necessarily all examples of step S305 the first score may be determined by first calculating a first running average magnitude 45 of the at least one vehicle body acceleration component 23 over a sampling window which ends on the first time, wherein the window length 43 of the sampling window may be fixed or may depend on the vehicle speed 27. The first score may then be determined in dependence on the first running average magnitude 45 of the at least one vehicle body acceleration component 23.

In some but not necessarily all examples of step S305 the first score may be determined in dependence on a combination of the multiple vehicle body acceleration components 23A-C, assuming that indications of multiple vehicle body acceleration components 23A-C are received in step S303. Combining the multiple vehicle body acceleration components 23A-C may comprise applying different weights to different vehicle body acceleration components 23A-C. The different weights may reflect perceivable effects of the vehicle body acceleration components on an occupant of the vehicle 1.

In some but not necessarily all examples of step S305 the first score may be determined by first calculating respective first running average magnitudes 45A-C for each of the multiple vehicle body acceleration components 23A-C over a sampling window which ends on the first time, wherein the window length 43 of the sampling window may be fixed or may depend on the vehicle speed 27. The first score may then be determined in dependence on a combination of the respective first running average magnitudes 45A-C for the multiple vehicle body acceleration components 23A-C. Combining the respective first running average magnitudes 45A-C for the multiple vehicle body acceleration components 23A-C may comprise applying different weights to the first running average magnitudes 45A-C of different vehicle body acceleration components 23A-C. The different weights may reflect perceivable effects of the vehicle body acceleration components on an occupant of the vehicle 1.

Step S307 comprises determining a second score in dependence on the at least one vehicle body acceleration component 23 at a second time. The first time precedes the second time. The first time may occur one time step before the second time. One time step may correspond to the sampling period of a vehicle body acceleration component 23.

In some but not necessarily all examples of step S307 the second score may be determined by first calculating a second running average magnitude 45 of the at least one vehicle body acceleration component 23 over a sampling window which ends on the second time, wherein the window length 43 of the sampling window may be fixed or may depend on the vehicle speed 27. The second score may then be determined in dependence on the second running average magnitude 45 of the at least one vehicle body acceleration component 23.

In some but not necessarily all examples of step S307 the second score may be determined in dependence on a combination of the multiple vehicle body acceleration components 23A-C, assuming that indications of multiple vehicle body acceleration components 23A-C are received in step S303. Combining the multiple vehicle body acceleration components 23A-C may comprise applying different weights to different vehicle body acceleration components 23A-C. The different weights may reflect perceivable effects of the vehicle body acceleration components on an occupant of the vehicle 1.

In some but not necessarily all examples of step S307 the second score may be determined by first calculating respective second running average magnitudes 45A-C for each of the multiple vehicle body acceleration components 23A-C over a sampling window which ends on the second time, wherein the window length 43 of the sampling window may be fixed or may depend on the vehicle speed 27. The second score may then be determined in dependence on a combination of the respective second running average magnitudes 45A-C for the multiple vehicle body acceleration components 23A-C. Combining the respective second running average magnitudes 45A-C for the multiple vehicle body acceleration components 23A-C may comprise applying different weights to the second running average magnitudes 45A-C of different vehicle body acceleration components 23A-C. The different weights may reflect perceivable effects of the vehicle body acceleration components on an occupant of the vehicle 1.

Step S309 comprises determining a permitted score range in dependence on the vehicle speed 27 at the second time, the permitted score range including the first score.

For different vehicle speeds 27, there may be different permitted score ranges. The different permitted score ranges differ in terms of one or more of: (i) a magnitude of the permitted score range i.e., a magnitude of the difference between its upper and lower endpoints; (ii) a relative position of the first score within the permitted score range i.e., the relative position of the first score with respect to the upper and lower endpoints. That is, for a given first score, the permitted score range differs at different vehicle speeds 27.

In some but not necessarily all examples, as vehicle speed 27 increases, a lower endpoint of the permitted score range becomes further from the first score. That is, as vehicle speed 27 increases, a difference 85 between a lower endpoint of the permitted score range and the first score increases in magnitude.

In some but not necessarily all examples, for a first range 75 of vehicle speeds, as vehicle speed 27 increases, an upper endpoint of the permitted score range becomes further from the first score. That is, for a first range 75 of vehicle speeds, as vehicle speed 27 increases, a difference 83 between an upper endpoint of the permitted score range and the first score increases in magnitude.

In some but not necessarily all examples, for a second range 77 of vehicle speeds, which is higher than the first range, as vehicle speed 27 increases, the upper endpoint of the permitted score range becomes closer to the first score. That is, for a second range 77 of vehicle speeds, which is higher than the first range, as vehicle speed 27 increases, the difference 83 between the upper endpoint of the permitted score range and the first score decreases in magnitude. The first and second ranges 75, 77 of vehicle speeds may be contiguous.

In some but not necessarily all examples of step S309 the permitted score range is determined in further dependence on a difference 81 between the first score and the second score.

As a negative difference 81 between the first score and the second score increases in magnitude, a difference 85 between a lower endpoint of the permitted score range and the first score increases in magnitude. The negative difference 81 between the first score and the second score may increase in magnitude more than the difference 85 between the lower endpoint of the permitted score range and the first score increases in magnitude.

For the first range 75 of vehicle speeds, as a positive difference 81 between the first score and the second score increases in magnitude, a difference 83 between an upper endpoint of the permitted score range and the first score increases in magnitude.

For a first part of the second range 77 of vehicle speeds, as a positive difference 81 between the first score and the second score increases in magnitude, the difference 83 between the upper endpoint of the permitted score range and the first score increases in magnitude.

For a second part of the second range 77 of vehicle speeds, which is higher than the first part, as a positive difference 81 between the first score and the second score increases in magnitude, the difference 83 between the upper endpoint of the permitted score range and the first score remains consistent or decreases in magnitude.

Step S311 comprises determining whether the second score is within the permitted score range.

Step S313 comprises generating a vehicle acceleration request 37 in dependence on the second score if the second score is within the permitted score range.

In some but not necessarily all examples of step S313 the vehicle acceleration request 37 may be generated instead by first determining a score difference 101 between the second score and a predefined score target 97, then determining a target value for vehicle acceleration using a predefined relationship between at least the score difference 101 and vehicle acceleration, and then basing the vehicle acceleration request 37 on the determined target value for vehicle acceleration.

In some but not necessarily all examples of step S313 the predefined relationship between at least the determined score difference 101 and vehicle acceleration may be a predefined relationship between (i) the score difference 101, (ii) the vehicle speed 27 and/or a driving surface gradient 31, and (iii) vehicle acceleration.

Step S315 comprises determining a third score being an endpoint of the permitted score range that is closest to the second score if the second score is not within the permitted score range and generating a vehicle acceleration request 37 in dependence on the third score.

In some but not necessarily all examples of step S315 the vehicle acceleration request 37 may be generated instead by first determining a score difference 101 between the third score and a predefined score target 97, then determining a target value for vehicle acceleration using a predefined relationship between at least the score difference 101 and vehicle acceleration, and then basing the vehicle acceleration request 37 on the determined target value for vehicle acceleration.

In some but not necessarily all examples of step S315 the predefined relationship between at least the determined score difference 101 and vehicle acceleration may be a predefined relationship between (i) the score difference 101, (ii) the vehicle speed 27 and/or a driving surface gradient 31, and (iii) vehicle acceleration.

In some but not necessarily all examples steps S313 and S315 may be followed by an additional (unillustrated) step of arbitration between the vehicle acceleration request 37(A) generated in step S313 and S315 respectively and a second and/or a third vehicle acceleration request 37B, 37C, wherein, as a result of the arbitration, an arbitrated vehicle acceleration request 37' is output.

In some but not necessarily all such examples the second vehicle acceleration request 37B is determined in dependence on a difference between the vehicle speed 27and a cruise control speed setpoint 139. The arbitration between the vehicle acceleration request 37(A) generated in step S313 or step S315 and the second vehicle acceleration request 37B comprises a minimum magnitude selection.

In some but not necessarily all such examples the third vehicle acceleration request 37C is determined for maintaining vehicle speed 27 above a threshold speed, wherein maintaining the vehicle speed 27 above the threshold speed may be a prerequisite for performance of the method 300. The arbitration between the vehicle acceleration request 37(A) generated in step S313 or step S315 and the third vehicle acceleration request 37C comprises a maximum magnitude selection.

FIG 21 illustrates yet another method 400 according to an embodiment of the invention. The method 400 is yet another method of controlling a speed of a vehicle 1, such as the vehicle 1 illustrated in FIG 1. The method 400 may be performed by the speed control system 5 illustrated in FIG 2A. In particular, the memory 17 may comprise computer-readable instructions 19 which, when executed by the processor 15, perform the method 400.

Step S401 comprises receiving an indication of a vehicle speed 27.

Step S403 comprises receiving an indication of a driving surface gradient 31.

Step S405 comprises receiving an indication of at least one vehicle body acceleration component 23.

In some but not necessarily all examples of step S405 multiple vehicle body acceleration components 23A-C are received. Different vehicle body acceleration components 23A-C correspond to different degrees of freedom of movement of a body of the vehicle 1. The different vehicle body acceleration components 23A-C may be heave, pitch, and roll accelerations experienced by the vehicle body.

An additional (unillustrated) step of receiving an indication of a user-selected setting 109 may be performed in some but not necessarily all examples. The user-selected setting 109 may be a ride comfort setting for the vehicle 1.

Step S407 comprises determining a score 59 in dependence on the at least one vehicle body acceleration component 23.

In some but not necessarily all examples of step S407 the score 59 may be determined by first calculating a running average magnitude 45 of the at least one vehicle body acceleration component 23 over a sampling window, wherein the window length 43 of the sampling window may be fixed or may depend on the vehicle speed 27. The score 59 may then be determined in dependence on the running average magnitude 45 of the at least one vehicle body acceleration component 23.

In some but not necessarily all examples of step S407 the score 59 may be determined in dependence on a combination of the multiple vehicle body acceleration components 23A-C, assuming that indications of multiple vehicle body acceleration components 23A-C are received in step S405. Combining the multiple vehicle body acceleration components 23A-C may comprise applying different weights to different vehicle body acceleration components23A-C. The different weights may reflect perceivable effects of the vehicle body acceleration components on an occupant of the vehicle 1.

In some but not necessarily all examples of step S407 the score 59 may be determined by first calculating respective running average magnitudes 45A-C for each of the multiple vehicle body acceleration components 23A-C over a sampling window, wherein the window length 43 of the sampling window may be fixed or may depend on the vehicle speed 27. The score 59 may then be determined in dependence on a combination of the respective running average magnitudes 45A-C for the multiple vehicle body acceleration components 23A-C. Combining the respective running average magnitudes 45A-C for the multiple vehicle body acceleration components 23A-C may comprise applying different weights to the running average magnitudes 45A-C of different vehicle body acceleration components 23A-C. The different weights may reflect perceivable effects of the vehicle body acceleration components on an occupant of the vehicle 1.

An additional (unillustrated) step of applying rate limiting to the score 59 to limit a rate at which the score 59 can change over time may be performed in some but not necessarily all examples. The rate limiting may apply fixed positive and negative limits on the rate at which the score 59 can change over time or may vary the positive and negative limits 69, 73 based on some parameter(s), for example vehicle speed 27 and a difference 81 between a previous rate-limited score 59" and a current (non-rate-limited) score 59.

Step S409 comprises determining a score difference 101 between the score 59 or the rate-limited score 59' and a predefined score target 97.

In some but not necessarily all examples of step S409, before determining the score difference 101, the predefined score target 97 is determined in dependence on the user-selected setting 109, assuming that an indication of a user-selected setting 109 is received.

Step S411 comprises determining a target value for vehicle acceleration using a predefined relationship between (i) the score difference 101, (ii) the vehicle speed 27 and/or the driving surface gradient 31, and (iii) vehicle acceleration.

In some but not necessarily all examples of step S409, before determining the target value for vehicle acceleration, the predefined relationship between (i) the score difference 101, (ii) the vehicle speed 27 and/or the driving surface gradient 31, and (iii) vehicle acceleration is obtained in dependence on the user-selected setting 109, assuming that an indication of a user-selected setting 109 is received. There are different predefined relationships associated with different user-selected settings 109.

In some but not necessarily all examples the predefined relationship comprises increasing vehicle acceleration as the score difference 101 becomes more positive or less negative.

In some but not necessarily all examples the predefined relationship comprises lower vehicle acceleration for downhill driving surface gradients 31 than for uphill driving surface gradients 31.

In some but not necessarily all examples the predefined relationship comprises greater decreases in vehicle acceleration for steeper downhill driving surface gradients 31 .

In some but not necessarily all examples the predefined relationship comprises greater decreases in vehicle acceleration for a given downhill driving surface gradient 31 for less positive or more negative score differences 101.

In some but not necessarily all examples the predefined relationship comprises greater increases in vehicle acceleration for steeper uphill driving surface gradients 31.

In some but not necessarily all examples the predefined relationship comprises greater increases in vehicle acceleration for a given uphill driving surface gradient 31 for more positive or less negative score differences 101.

In some but not necessarily all examples the predefined relationship comprises, for a first range 127 of vehicle speeds, increasing vehicle acceleration for at least positive score differences 101.

In some but not necessarily all examples the predefined relationship comprises, for the first range 127 of vehicle speeds, greater increases in vehicle acceleration for more positive score differences 101. That is, given a vehicle speed 27 in the first range 127 and a positive score difference 101 (suggesting e.g., that driving surface is becoming smoother) the predefined relationship proposes higher values of vehicle acceleration for higher score differences 101.

In some but not necessarily all examples the predefined relationship comprises, for the first range 127 of vehicle speeds, greater increases in vehicle acceleration for lower vehicle speeds 27.

In some but not necessarily all examples the predefined relationship comprises, for a second range 129 of vehicle speeds, which is higher (and in some examples narrower) than the first range 127 of vehicle speeds, decreasing vehicle acceleration for at least positive score differences 101.

In some but not necessarily all examples the predefined relationship comprises, for the second range 129 of vehicle speeds, greater decreases in vehicle acceleration for more positive score differences 101.

In some but not necessarily all examples the predefined relationship comprises, for the second range 129 of vehicle speeds, greater decreases in vehicle acceleration for higher vehicle speeds 27.

Step S413 comprises generating a vehicle acceleration request 37 based on the determined target value for vehicle acceleration.

In some but not necessarily all examples step S413 may be followed by an additional (unillustrated) step of arbitration between the vehicle acceleration request 37(A) generated in step S413 and a second and/or a third vehicle acceleration request 37B, 37C, wherein, as a result of the arbitration, an arbitrated vehicle acceleration request 37' is output.

In some but not necessarily all such examples the second vehicle acceleration request 37B is determined in dependence on a difference between the vehicle speed 27and a cruise control speed setpoint 139. The arbitration between the vehicle acceleration request 37(A) generated in step S413 and the second vehicle acceleration request 37B comprises a minimum magnitude selection.

In some but not necessarily all such examples the third vehicle acceleration request 37C is determined for maintaining vehicle speed 27 above a threshold speed, wherein maintaining the vehicle speed 27 above the threshold speed may be a prerequisite for performance of the method 400. The arbitration between the vehicle acceleration request 37(A) generated in step S413 and the third vehicle acceleration request 37C comprises a maximum magnitude selection.

It will be appreciated that each method 200, 300, 400 can be combined with one or both of the other methods.

It will be appreciated that various changes and modifications can be made to the present invention without departing from the scope of the present application.

It is to be understood that the or each controller 7 can comprise a control unit or computational device having one or more electronic processors (e.g., a microprocessor, a microcontroller, an application specific integrated circuit (ASIC), etc.), and may comprise a single control unit or computational device, or alternatively different functions of the or each controller 7 may be embodied in, or hosted in, different control units or computational devices. As used herein, the term "controller," "control unit," or "computational device" will be understood to include a single controller, control unit, or computational device, and a plurality of controllers, control units, or computational devices collectively operating to provide the required control functionality. A set of instructions could be provided which, when executed, cause the controller 7 to implement the control techniques described herein (including some or all of the functionality required for the method(s) described herein). The set of instructions 19 could be embedded in said one or more electronic processors 15 of the controller 7; or alternatively, the set of instructions 19 could be provided as software to be executed in the controller 7. A first controller or control unit may be implemented in software run on one or more processors. One or more other controllers or control units may be implemented in software run on one or more processors, optionally the same one or more processors as the first controller or control unit. Other arrangements are also useful.

The, or each, electronic processor 15 may comprise any suitable electronic processor (e.g., a microprocessor, a microcontroller, an ASIC, etc.) that is configured to execute electronic instructions 19. The, or each, electronic memory device 17 may comprise any suitable memory device and may store a variety of data, information, threshold value(s), lookup tables or other data structures, and/or instructions therein or thereon. In an embodiment, the memory device 17 has information and instructions for software, firmware, programs, algorithms, scripts, applications, etc. stored therein or thereon that may govern all or part of the methodology described herein. The processor, or each, electronic processor 15 may access the memory device 17 and execute and/or use that or those instructions and information to carry out or perform some or all of the functionality and methodology described herein.

The at least one memory device 17 may comprise a computer-readable storage medium (e.g. a non-transitory or non-transient storage medium) that may comprise any mechanism for storing information in a form readable by a machine or electronic processors/computational devices. Examples of the form include, without limitation: a magnetic storage medium (e.g. floppy diskette); optical storage medium (e.g. CD-ROM); magneto optical storage medium; read only memory (ROM); random access memory (RAM); erasable programmable memory (e.g. EPROM ad EEPROM); flash memory; or electrical or other types of medium for storing such information/instructions.

It will be appreciated that embodiments of the present invention can be realised in any suitable form of hardware, software or a combination of hardware and software. For example, it is contemplated that the present invention is not limited to being implemented by way of programmable processing devices, and that at least some of, and in some embodiments all of, the functionality and or method steps of the present invention may equally be implemented by way of non-programmable hardware, such as by way of non-programmable ASIC, Boolean logic circuitry, etc.

The steps illustrated in FIGs 19 to 21 may represent steps in a method and/or sections of code in the computer program 19. The illustration of a particular order to the steps does not necessarily imply that there is a required or preferred order for the steps and the order and arrangement of the steps may be varied. Furthermore, it may be possible for some steps to be omitted.

Features described in the preceding description may be used in combinations other than the combinations explicitly described. Although functions have been described with reference to certain features, those functions may be performable by other features whether described or not. Although features have been described with reference to certain embodiments, those features may also be present in other embodiments whether described or not.

## Claims

1. A speed control system for a vehicle, the speed control system comprising one or more processors collectively configured to:
receive a signal indicative of a vehicle speed;
receive a signal indicative of a driving surface gradient;
receive a signal indicative of at least one vehicle body acceleration component;
determine a score in dependence on the at least one vehicle body acceleration component;
determine a score difference between the score and a predefined score target;
determine a target value for vehicle acceleration using a predefined relationship between the score difference, the vehicle speed and/or the driving surface gradient, and vehicle acceleration; and
generate a vehicle acceleration request based on the determined target value for vehicle acceleration.

2. The speed control system of any preceding claim, wherein the at least one vehicle body acceleration component comprises at least one from: heave, pitch, or roll accelerations.

3. The speed control system of any preceding claim, wherein the at least one vehicle body acceleration component is received from one or more accelerometers and/or one or more gyroscopes mounted to a body of the vehicle.

4. The speed control system of any preceding claim, wherein the one or more processors are collectively configured to:
receive multiple vehicle body acceleration components, wherein different vehicle body acceleration components correspond to different degrees of freedom of movement of a body of the vehicle; and
determine the score in dependence on a combination of the multiple vehicle body acceleration components.

5. The speed control system of claim 4, wherein the one or more processors are collectively configured to combine the multiple vehicle body acceleration components by applying different weights to different vehicle body acceleration components.

6. The speed control system of any preceding claim, wherein the one or more processors are collectively configured to:
receive a signal indicative of a user-selected setting; and
determine the predefined score target in dependence on the user-selected setting.

7. The speed control system of claim 6, wherein the user-selected setting is a ride comfort setting for the vehicle.

8. The speed control system of claim 7, wherein the one or more processors are collectively configured to obtain, in dependence on the user-selected setting, the predefined relationship between the score difference, the vehicle speed and/or the driving surface gradient, and vehicle acceleration, wherein there are different predefined relationships associated with different user-selected settings.

9. The speed control system of any preceding claim, wherein the predefined relationship comprises increasing vehicle acceleration as the score difference becomes more positive or less negative.

10. The speed control system of any preceding claim, wherein the predefined relationship comprises lower vehicle acceleration for downhill driving surface gradients than for uphill driving surface gradients.

11. The speed control system of any preceding claim, wherein the predefined relationship comprises, for a first range of vehicle speeds, increasing vehicle acceleration for at least positive score differences.

12. The speed control system of claim 11, wherein the predefined relationship comprises, for a second range of vehicle speeds, which is higher than the first range of vehicle speeds, decreasing vehicle acceleration for at least positive score differences.

13. A vehicle or a system for controlling a speed of a vehicle, comprising:
the speed control system according to any preceding claim;
a sensor configured to output a signal indicative of a vehicle speed;
a sensor configured to output a signal indicative of a driving surface gradient;
at least one sensor configured to output a signal or signals indicative of at least one vehicle body acceleration component; and
a vehicle powertrain configured to accelerate the vehicle in accordance with the vehicle acceleration request by controlling an amount of drive torque applied to one or more wheels of the vehicle.

14. A method for controlling a speed of a vehicle, the method comprising:
receiving an indication of a vehicle speed;
receiving an indication of a driving surface gradient;
receiving an indication of at least one vehicle body acceleration component;
determining a score in dependence on the at least one vehicle body acceleration component;
determining a score difference between the score and a predefined score target;
determining a target value for vehicle acceleration using a predetermined relationship between the score difference, the vehicle speed and/or the driving surface gradient, and vehicle acceleration; and
generating a vehicle acceleration request based on the determined target value for vehicle acceleration.

15. Computer readable instructions which, when executed by a computer, are arranged to perform the method of claim 14.
